Europäisches Patentamt

European Patent Office

Office européen des brevets

(11) Publication number: **0 178 608 B1**

# EUROPEAN PATENT SPECIFICATION

(45) Date of publication of patent specification: **29.12.93**  (51) Int. Cl.5: **H04B 1/66**, H04K 1/00

(21) Application number: **85112940.3**

(22) Date of filing: **11.10.85**

(54) Subband encoding method and apparatus.

(30) Priority: **17.10.84 US 661597**
**17.10.84 US 661598**
**17.10.84 US 661733**
**17.10.84 US 661740**

(43) Date of publication of application:
**23.04.86 Bulletin 86/17**

(45) Publication of the grant of the patent:
**29.12.93 Bulletin 93/52**

(84) Designated Contracting States:
**DE FR GB NL SE**

(56) References cited:
**EP-A- 0 084 125**
**EP-A- 0 111 612**
**GB-A- 2 086 106**
**US-A- 4 027 243**
**US-A- 4 434 323**

**PROCEEDINGS OF THE NATIONAL ELEC-
TRONICS CONFERENCE, vol. 37, 1983, pages
29-33, Oak Brook, Illinois, US; V. GUPTA et
al.: "A cascaded digital signal processor for
real-time speech coding"**

(73) Proprietor: **Ericsson GE Mobile Communica-
tions Inc.
P.O. Box 4096,
Mountain View Road
Lynchburg, Virginia 24502-9989(US)**

(72) Inventor: **Szczutkowski, Craig Francis
208 Ivy Lake Drive
Forest Virginia 24551(US)**
Inventor: **Zinser, Richard Louis, Jr.
1197 Hillside Avenue
Apt. A8
Schenectady New York 12307(US)**
Inventor: **Kappagantula, Satish
412 H. Kerry Lane
Lynchburg Virginia 24502(US)**
Inventor: **Peterson III, Eugene Harold
124 Hickory Hill Lane
Forest Virginia 24551(US)**

(74) Representative: **Muir, Ian R. et al
HASELTINE LAKE & CO.
Hazlitt House
28 Southampton Buildings
Chancery Lane
London WC2A 1AT (GB)**

EP 0 178 608 B1

PROCEEDINGS OF THE IEEE INTERNATIONAL
CONFERENCE ON COMMUNICATIONS ICC'84
Links for the Future, vol. 3, May 14-17, 1984,
Amsterdam, NL; R.L. ZINSER et al.: "A robust
9.6 Kb/s subband coder design for the
Rayleigh fading channel"

IEEE INTERNATIONAL CONFERENCE ON
ACOUSTICS, SPEECH AND SIGNAL PRO-
CESSING, March 30 - April 1, 1981, Atlanta,
US; Proceedings, vol. 2, pages 808-811, IEEE,
New York, US; T. BARNWELL: "An experi-
mental study of sub-band coder design in-
corporating recursive quadrature filters and
optimum ADPCM"

INTERNATIONAL CONFERENCE ON SECURE
COMMUNICATIONS SYSTEMS, February
22-23, 1984, pages 32-37, London, GB; C.
MITCHELL: "A comparison of the crypto-
graphic requirements for digital secure
speech systems operating at different bit
rates"

**Description**

Subband coders of various types, as well as many types of quantized digital signal encoding/ decoding algorithms, are well known in the art. For example, the art of subband coder design for a Rayleigh fading channel including discussion of adaptive pulse code modulation (APCM) and block companded pulse code modulation (BCPCM) are discussed in "A Robust 9.6 Kb/s Subband Coder Design for the Rayleigh Fading Channel" by Zinser, Silverstein and Anderson, Proceedings of the IEEE International Conference on Communications, May 1984, Volume 3, pp. 1163-1168. A collection of prior art publications relevant to subband coder design is contained in this paper and is reproduced below (items 1-10) together with additional possibly relevant prior art publications (11-15):

1. Crochiere, R.E., Webber, S.A. and Flanagan, J.L., "Ditigal Coding of Speech in Subbands", Bell Syst. Tech. J., 55 (Oct. 1976), 1069-1085.
2. Crochiere, R.E., :On the Design of Sub-band Coders for Low-Bit-Rate Speech Communication", Bell Syst. Tech. J., 56 (May-June 1977), 747-770.
3. Crochiere, R.E., "Digital Signal Processor: Sub-band Coding", Bell Syst. Tech. J., 60 (September 1981), 1633-1653.
4. Esteban, D. and Galand, C., "Application of Quadrature Mirror Filters to Split Band Voice Coding Schemes", Proc. 1977 Int. Conf. on Acoustics, Speech and Signal Processing, Hartford, CT (May 1977), 191-195.
5. Cummiskey, P., Jayant, N.S. and Flanagan, J.L., "Adoptive Quantization in Differential PCM Coding of Speech", Bell Syst. Tech. J., 52 (September 1973), 1105-1118.
6. Godman, D.J. and Wilkinson, R.M., "A Robust Adaptive Quantizer", IEEE Trans. Communications, COM-23 (November 1975), 1362-1365.
7. Croisier, A., "Progress in PCM and Delta Modulation: Block Companded Coding of Speech Signals", 1974 Int. Zurich Seminar, Proceedings.
8. Jonston, J.D., "A Filter Family Designed for Use in Quadrature Mirror Filter Banks", Proceedings 1980 Int. Conf. on Acoustics Speech and Signal Processing, Denver, CO (April 1977), 291-294.
9. Max, J., "Quantizing for Minimum Distortion", IRE Trans. Information Theory, IT-6 (March 1960), 7-12.
10. Jakes, W.C., "Microwave Mobile Communications", J. Wiley and Sons, New York (1974).
11. Boddie, J.R., et al, "Adaptive Differential Pulse-Code-Modulation Coding", The Bell System Technical Journal, Volume 60, No. 7, September 1981, pp. 1547-1561.
12. Crochiere, R.E., et al, "A 9.6 Kb/s DSP Speech Coder", The Bell System Technial Journal, Volume 61, No. 9, November 1982, pp. 2263-2288.
13. Smith, M.J.T., et al, "A Procedure for Designing Exact Reconstruction Filter Banks for Tree-Structured Subband Coders", Proceedings of the IEEE International Conference on Acoustics, Speech and Signal Processing, March 1984, Volume 2, pp. 27.1.1-27.1.4.
14. Barnwell, T.P., et al, "A Real Time Speech Subband Coder Using the TMS32010", ...
15. Fjallbrant, T., et al, "A Speech Signal ATC-system With Short Primary Blocklengths and Microprocessor-based Implementation", ....., pp. 357-363.

In real time subband vocoder applications such as those generally described in the above prior art, there are at least two popular techniques for quantization and coding: (a) adaptive pulse code modulation (APCM) or the closely related adaptive differential pulse code modulation (ADPCM) and (b) block companded pulse code modulation (BCPCM). Both of these popular subband coding techniques are discussed in detail in the above-referenced Zinser et al paper which describes and compares a subband coder using the relatively high-complexity BCPCM encoding/decoding algorithm and a subband coder using the relatively low-complexity APCM encoding/decoding algorithm. This comparison reveals that an APCM subband coder gives lower subjective quality and less channel error tolerance than a BCPCM subband coder. As will be appreciated, the less complex APCM algorithm requires less memory to implement (e.g., in a digital signal processor) than does the more complex BCPCM algorithm.

As a result, it might be concluded that it would be preferable to use a BCPCM subband coder. However, the greater memory requirements for BCPCM algorithms have been discovered to exceed the available RAM capacity of some available digital signal processing (DSP) integrated circuits (e.g., the NEC 7720 integrated circuit which has only 128 X 16 bits of RAM).

Nevertheless, in accordance with the present invention, we have discovered that it is possible to use hybrid subband APCM/BCPCM algorithms to minimize required digital memory while still yielding 1 db or more improvement in the overall signal-to-noise ratio (and possibly better subjective voice quality) as compared to a conventional all APCM subband coder.

While in the past different encoding/decoding algorithms have sometimes been cascaded (e.g., see Crochiere et al "A 9.6-Kb/s DSP Speech Coder" which uses a time domain harmonic scaling algorithm prior to a subband coding algorithm which uses ADPCM in each subband), the use of different encoding/decoding algorithms in the various subbands of a subband coder in accordance with the invention is believed to be novel technique. Within the context of a digital signal processor (DSP) integrated circuit implementation having limited digital memory capacity, such new hybrid subband coding techniques have been discovered to offer significant advantages.

For example, in the presently preferred exemplary embodiment, an audio signal bandwidth of 180 to 2900 Hz is divided into four octaves. Given that perhaps only one of those octave subbands can be handled with the more complex BCPCM algorithm, we have chosen the highest treble band (e.g, 1450-2900 Hz) as being the preferable subband for BCPCM coding. In the exemplary embodiment, so as to achieve a total output rate of 9,244 bits per second, this highest subband must be coded with no more than about 1-1/3 bits per sample. Accordingly, in the exemplary embodiment, the real time digital signal processor implements BCPCM by encoding a 16-sample block with 16 sign bits and 5 bits of gain magnitude data. This results in an output rate of 21/16 or 1.3125 bits per sample. Furthermore, such a technique requires only two words of computer memory in a 16-bit architecture. Namely, one 16-bit FIFO buffer for the sign bits and one 16-bit buffer in which to accumulate the gain magnitude.

We have discovered that when such a hybrid subband coder is applied to typical voice signals, the hybrid scheme yields approximately one decibel better signal-to-noise ratio (e.g., 4 db vs. 3 db and perhaps even more) as when compared to a similar all APCM subband coder (e.g., one which uses 1-1/3 bits per sample for the highest treble subband).

Subband coders using non-symmetrical quadrature mirror filter (QMF) filter trees are also well known in the art. For example, such a QMF filter tree used for separating digitized speech signals Into four octave bands (and an inverse QMF tree for combining them back into one band at the receiver) in the context of a subband encoding/decoding technique is discussed in the above-referenced paper by Zinser et al.

As is well known in the art, non-symmetrical QMF filter trees are well suited for efficiently dividing a digitized input signal into subband channels of digital signals representing different frequency subbands of signal components. Such a QMF filter tree is particularly advantageous where programmed digital signal processors are employed to physically implement the signal processing algorithms.

It is also well known that because of the non-symmetrical tree structure of such a QMF filter bank, the various bands have different numbers of filter elements therewithin thus causing different filtering process times to be involved in the different subband channels. It is conventional practice to include compensating time delay in the various subband channels so as to keep the digital signals representing the different frequency components travelling in approximate time synchronism throughout the system. A formula for calculating the required magnitude of time delay compensation in each channel is expressly given in the above-referenced Zinser et al paper.

However, in prior art subband coded signal processing, such time delay compensation has been conventionally effected as a part of or immediately adjacent the QMF filtering function itself. When thus closely associated with the QMF filter tree, the digital memory required for time delay compensation can be rather large due to the relatively high bit rates involved.

Now, however, we have discovered that one may successfully perform the required time delay compensation upon bandwidth compressed encoded digital signals in the subband channels thereby greatly reducing the required memory for implementing such time delay compensation.

For example, on the transmitter side, time delay compensation is not introduced until after digital bandwidth compression takes place by a suitable encoding algorithm (e.g. adaptive pulse code modulation, adaptive differential pulse code modulation, block companded pulse code modulation, etc.). On the receiver side, similar required time delay compensation associated with the inverse QMF filter tree may be effected prior to the decoding step. (If desired, the total desired subband delay for any given channel may be effected totally at the transmitter side or totally at the receiver side or divided therebetween in any desired fashion.)

In the exemplary embodiment, there is an approximately 4.7:1 ratio between the number of bits per second passing through the system before encoding and after encoding. Accordingly, performing the required time delay compensation at points in the system where the signals are compressed to minimum bit rates can significantly minimize the digital memory required for implementing such time delays. In the exemplary embodiment, the conventionally required RAM (for implementing delay compensation as calculated in the Zinser et al paper) is 49 sixteen bit words whereas, using our invention, only 5 sixteen bit words of RAM are required.

4

The present invention includes a technique for efficient implementation of delay equalization in a subband coder/decoder (e.g. a multi-band data compression waveform encoder/decoder). It permits particularly efficient implementation (in terms of minimum digital memory requirements) of speech bandwidth compression algorithms. It may also, of course, be used to efficiently implement sore generalized waveform encoder/decoder algorithms where digital signals are bandwidth compressed so as to require the transmission of fewer bits per second at some points in the system.

In particular, efficient realization of delay equalization is provided for filter elements (or for that matter any other elements) so as to bring the processed signal within the discrete subbands back into time synchronism with respect to one another before they are multiplexed and transmitted over a common communication channel and/or at least before they are decoded and recombined in proper time synchronism (i.e. "in phase"). Since some presently available DSPs (Digital Signal Processors) have only limited on-chip digital memory capacity, the more efficient time delay compensation technique of the present invention may permit all of the required signal processing functions to be implemented on a single DSP integrated circuit chip.

Transceiving digital control and message data signals over radio communication channels is also already well known in the art. For example, reference may be had to commonly-assigned U.S. Patent No. 4,027,243 - Stackhouse et al which describes a form of digital message generator for a digitally controlled radio transmitter and receiver in a radio communication system. Provisions are made for acquiring bit synchronization as well as word synchronization (including the multiple transmission of address information in complemented and uncomplemented form) in each of a steady succession of digital command messages transmitted between radio station sites. A modem circuit capable of detecting a 2 out of 3 voted Barker code sync word for frame synchronization is included in the Stackhouse et al system.

Cryptographic encoding of digitized speech signals is also well known in the prior art. For example, the Data Encryption Standard (DES) utilized in the presently preferred exemplary embodiment of this invention is itself well known and more fully described in detail in the following printed publications:

"Federal Information Processing Standards" Publication No. 46, Data Encryption Standard, U.S. Department of Commerce, NTIS, 5285 Port Royal Road, Springfield, Virginia 22161;

"Federal Standard 1027 GSA, Telecommunications, General Security Requirements For Equipment Using DES" available from NTIS or the U.S. Government Printing Office; and

"Federal Information Processing Standards Publication No. 81, DES Modes of Operation" (the "output feedback mode" is utilized in the presently preferred embodiment of this invention), also available from NTIS or the U.S. Government Printing Office.

Typically, as in DES, encoded digital voice signals are transmitted in blocks or "frames" of fixed size along with a progressively changing encryption "vector" which, when combined with appropriate secret "key" digital data, may be used to encode or decode digitized voice data (or any other type of digital data).

It is also known to provide automatic selective signalling within radio communication networks of various types. Sometimes a separate "control" channel is utilized for achieving the desired selective signalling functions (e.g. selection of available communication channels and selection of a desired subset of message recipients within the system).

However, for various reasons, in prior voice privacy systems utilizing digitized and cryptographically encoded voice data signals, truly automatic selective signalling capability is not believed to have been previously available. Nevertheless, it is highly desirable in many radio communication environments to have such selective signalling capability. For example, it may be very useful to selectively address one of plural repeaters that may be within range of a given transceiver which is generating or relaying such an encrypted digital voice message.

It is also believed highly desirable to permit late entry and/or synchronization recovery (both word and cryptographic synchronization recovery) in the context of a digital voice privacy radio communication system having true selective signalling capability.

As explained in Stackhouse et al, a radio frequency communication channel is a relatively noisy and sometimes unreliable environment, Impulse noise, multipath interference and signal fading are typical of the expected problems that must be successfully overcome.

The present invention utilizes a unique format of control and encoded voice digital signals which provides the above set forth desired features especially well in the context of a radio frequency communication channel. It follows, of course, that the same unique format is also advantageous for any other less onerous type of communication channel such as, for example, conventional telephone channels or wire lines (perhaps also using added conventional modems on each end of the channel).

EP-A-0111612 discloses a signal coder comprising filter means for separating an input signal into a plurality of subbands; means for encoding each subband signal with both a backward adaptive encoding algorithm and a forward adaptive encoding algorithm; and means for selecting, for each subband, one of the two encoded signals for transmission.

According to a first aspect of the present invention, there is provided a hybrid subband electrical signal processor comprising:

filter means having an input for accepting digital electrical signals representing a band of frequency components and providing four octave subband outputs covering an overall frequency band of approximately 180 to 2900 Hz;

first digital encoder means for receiving the three lowest frequency octave digital subband signals from said outputs and for encoding each such received subband in accordance with an APCM or ADPCM encoding algorithm to produce first encoded digital signals;

second digital encoder means for receiving the highest octave digital subband signals from another one of said outputs and for encoding such received subband signals in accordance with a BCPCM encoding algorithm to produce second encoded digital signals; and

multiplex means for combining said first and second encoded digital signals into a common string of digital signals for transmission over a digital signal communication channel.

According to a second aspect of the present invention, there is provided a hybrid subband electrical signal processing method comprising:

accepting digital electrical signals representing a band of frequency components and producing four octave subband outputs covering an overall frequency band of approximately 180 to 2900 Hz;

receiving the three lowest frequency octave digital subband signals from said outputs and encoding such received subband signals in accordance with an APCM or ADPCM encoding algorithm to produce first encoded digital signals;

receiving the highest octave digital subband signals from another one of said outputs and encoding such received subband signals in accordance with a BCPCM encoding algorithm to produce second encoded digital signals; and

combining said first and second encoded digital signals into a common string of digital signals for transmission over a digital signal communication channel.

These as well as other advantages, objects and features of the invention will be better appreciated by careful study of the following detailed description of the presently preferred exemplary embodiment of this invention in conjunction with the accompanying drawings, of which:

FIGURE 1 is a schematic block diagram of the hardware and overall hardware architecture which may be utilized to implement this invention;

FIGURE 2 is a functional block diagram of an exemplary hybrid subband coder in accordance with this invention of the type which may be implemented by the digital signal processing or "speech coding circuits" shown in FIGURE 1;

FIGURE 3 is a functional block diagram of an exemplary ADPCM coder/decoder of the type depicted in FIGURE 2 and which can also be implemented by proper programming of a digital signal processor (DSP) such as that shown in FIGURE 1;

FIGURE 4 is a functional block diagram of an exemplary BCPCM coder/decoder of the type generally depicted in FIGURE 2 and which may also be implemented by properly programming the digital signal processor (DSP) circuits of FIGURE 1;

FIGURE 5 is a general functional flow diagram of a transmit operation in the exemplary embodiment;

FIGURE 6 is a flow diagram of an exemplary receive operation in the exemplary embodiment;

FIGURE 7 is a graph depicting the nonoverlapping subbands utilized in the preferred exemplary embodiment so as to minimize distortion otherwise caused by the relatively coarse quantization steps necessarily utilized in the exemplary embodiment ADPCM/BCPCM hybrid subband coder/decoder;

FIGURE 8 is a functional block diagram of a typical prior art time delay compensation process;

FIGURE 9 is a functional block diagram of a time delay compensation process in a subband transmitter encoder in accordance with this invention;

FIGURE 10 is a functional block diagram of a time delay compensation process for a subband receiver decoder in accordance with this invention;

FIGURE 11 is a schematic/graphic depiction of an exemplary preferred format or time sequence of the transmitted and/or received stream of digital signals in the exemplary embodiment of FIGURE 1; and

FIGURES 12-14 are simplified general flow block diagrams of exemplary computer programs that are embodied in the control program memory devices of the exemplary FIGURE 1 system embodiment for the purposes of sync maintenance, acquisition and late entry.

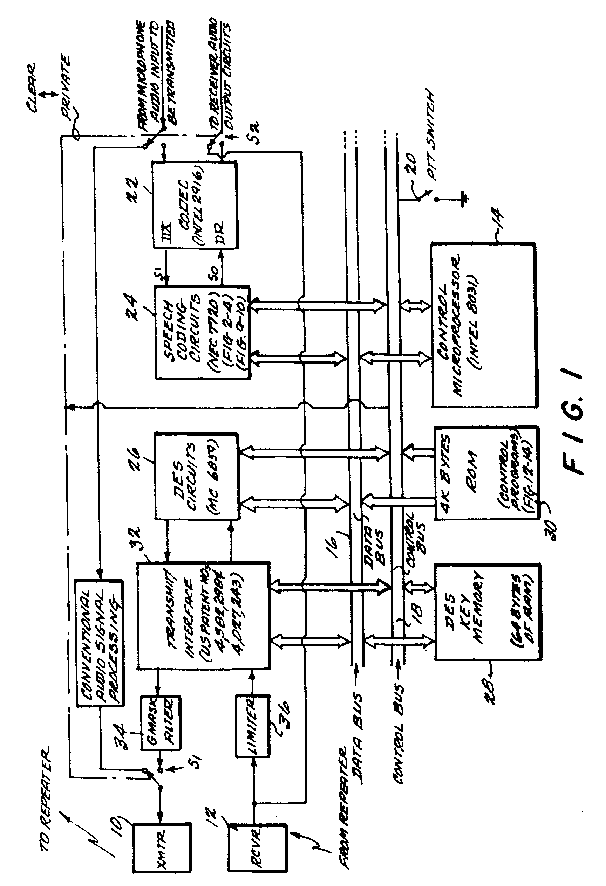

The transceiver of FIGURE 1 includes the usual radio frequency transmitter 10 and radio frequency receiver 12 (or any other communication channel transmitter and receiver such as, for example, the transmit lines and receive lines of a conventional wire line modem). As indicated in FIGURE 1, the transceiver may be in communication with one or more repeaters or other transceivers or base station(s) over a radio frequency or other forms of communication channel. The clear/private switches S1, S2 (typically realized as conventional solid state controlled MUX switches used to switch analog signals under control of digital switch signals) say be provided so that the transceiver can operate in a conventional "clear" mode or alternatively, in the cryptographic or "private" mode. For example, when the switches are in the "clear" mode as shown in FIGURE 1, the audio input coming from a microphone and to be transmitted is simply directly connected to transmitter 10 while the output of receiver 12 is directly connected to the usual receiver audio output circuit.

However, when switches S1, S2 are moved to the "private" mode position, then the microprocessor controlled remainder of the FIGURE 1 circuitry is switched into operation between the usual receiver audio input/output circuits and the usual radio frequency transmitter/receiver circuits 10, 12. In particular, the microprocessor controlled circuitry will take conventional audio input signals (e.g. from a microphone or audio amplifier or the like) and convert those to a stream of cryptographically encoded digital signals input at switch S1 to the modulator of transmitter 10. On the receiving side, A stream of digital signals arrives via the detector output of receiver 12 and is ultimately decoded and converted into analog audio signals at the lower contact of switch S2 before being passed onto the usual receiver audio output circuits (e.g. audio amplifiers, loudspeakers, etc.).

In the preferred embodiment, the detector output of receiver 12 is constantly connected to the "private" digital decoding circuits (as shown in FIGURE 1) so that the received signal can constantly be monitored. If a switch from "clear" to "private" mode is unexpectedly effected at the transmitter (e.g. initially or in the middle of an ongoing message), then the receiver "private" circuit will automatically begin the requisite decoding process and have decoded audio signals switched to the receiver audio output circuits automatically. This arrangement also makes it possible for the receiving set to automatically switch itself into the "private" mode wherever incoming digital signals are successfully decoded and in fact, this is contemplated for the preferred embodiment.

The overall architecture of the microprocessor control circuits shown in FIGURE 1 is generally conventional. In particular, the heart of the system is a control microprocessor 14 (e.g. an Intel 8031 integrated circuit chip). Communication with the remainder of the digital circuitry is via the usual data bus 16 and control bus 18. The usual push-to-talk (PTT) switch 20 may be considered as one wire in the control bus 18 if desired. A manual clear/private mode switch used for selecting the mode of transmitted voice may also be one wire in the control bus 18 if desired. As should be appreciated, there is no need for a manual receive clear/private mode switch when automatic receive mode switching is performed as explained above. The system may include a conventional codec 22 (e.g. an Intel 2916 integrated circuit chip) and conventional speech coding circuits 24 in the form of a suitably programmed Digital Signal Processor (DSP) (e.g. an NEC 7720 integrated circuit chip) for converting audio signals to/from digital-analog form in accordance with known speech digitization and processing algorithms.

In the preferred exemplary embodiment, the audio frequency band 180-2900 Hz is split into four octaves with the highest frequency band 1450-2900 Hz being subject to conventional block companded pulse code modulation (BCPCM) and the lower three subbands being subject to conventional adaptive pulse code modulation (APCM) digital bandwidth compression techniques. This plus a novel time delay compensation technique permit the speech coding to be carried out using but a single DSP chip 24.

The Data Encryption Standard is implemented via conventional DES circuits 26 (e.g. an MC 6859 integrated circuit chip) and a conventional DES key memory 28 (e.g. 64 bytes of RAM). Suitable conventional ROM circuits 30 (e.g. 4 kilobytes) are also provided to physically embody the program control structure pertinent to the present invention as indicated in FIGURE 1.

The transmit/receive interface circuits 32 are sometimes referred to as "modem" circuits and may also be of conventional design. They preferably include bit restoration circuits of the type described in commonly assigned U.S. Patent No. 4,382,298 - Evans. Although conventional clock recovery and up/down counter circuits can be employed with this invention, it is presently preferred to use the clock recovery circuits described in the copending commonly assigned Evans application Serial No. 527,471 filed August 29, 1983 and the up/down counter circuits described in the copending commonly assigned Evans application Serial No. 527,470 filed August 29, 1983. Reference may also be had to the commonly assigned U.S Patent No. 4,027,243 - Stackhouse et al for digital transmit/receive modem interface circuits suitable for use with radio frequency transmitters and receivers such as transmitter 10 and receiver 12 and for a hardwired Barker code sync word detector. In the preferred exemplary embodiment, the interface 32 may be placed in a "sync search" mode whereupon such a Barker code sync word detector is activated and which thereupon outputs a priority interrupt signal to control microprocessor 14 whenever such a sync word is detected.

A conventional Gaussian Minimum Shift Key (GMSK) filter 34 (e.g. a fourth order low Pass Bessel filter having an about 7 kilohertz cut-off measured at the 3 dB points) is preferably included to process the stream of digital output signals before they are passed onto the modulator of transmitter 10 as should be appreciated by those in the art.

The output of receiver 12 (e.g. from an fm discriminator) is also preferably passed through a conventional limiter circuit 36 to eliminate d.c. bias effects that otherwise might be present in the output of the receiver discriminator. For example, the limiter 36 may utilize a simple comparator to compare the instantaneous incoming signal from receiver 12 with a running averaged value over some previous relatively short interval as should also be appreciated by those in the art.

The transmit/receive interface 32 may, for example, on the transmit side comprise a conventional parallel-to-serial shift register for generating a serial stream of digital binary signals to be transmitted. On the receive side, the transmit/receive interface 32 may typically utilize a digital phase locked loop for achieving bit synchronization and a hardwired correlator for recognizing a predetermined Barker code which may be used for achieving word synchronization.

The data format used in the preferred embodiment is set forth below. Similarly, the time delay compensation used in conjunction with QMF banks is preferably inserted after the coding step (during transmission) and prior to the decoding step (during reception). This minimizes the memory required for implementing such time delays and is thus useful in permitting implementation using but a single DSP with limited memory capacity.

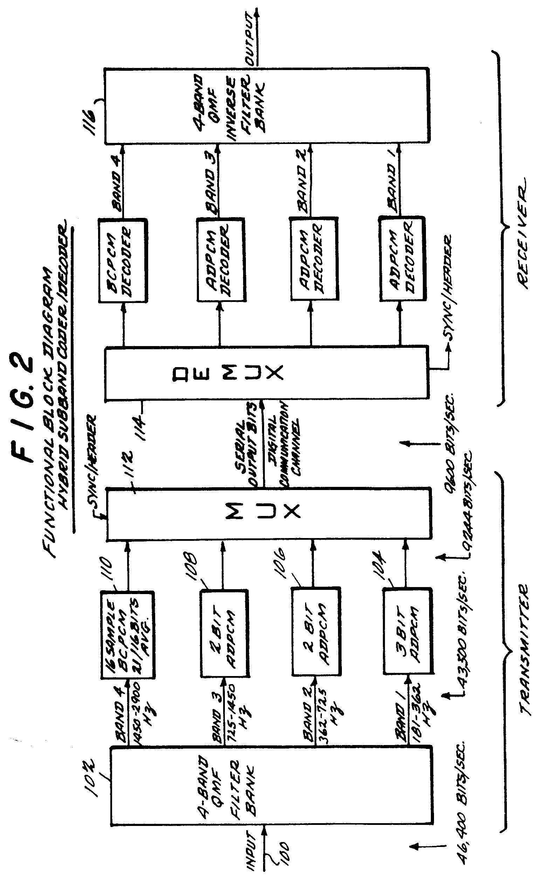

Those skilled in the art will understand that modern DSP circuits are now available which may be appropriately programmed (e.g., microcoded) so as to implement desired filtering and time delay functions as well as encoding/decoding algorithms (e.g., ADPCM/BCPCM), multiplexing, demultiplexing, etc., functions. Indeed, in the presently preferred exemplary embodiment, an NEC 7720 digital signal processor (DSP) 24 in FIGURE 1 is so programmed. However, to better understand the functional significance of the various digital signal processing steps and to thus faciliate their implementation through proper programming, it is common to utilize functional block diagrams of the type depicted in FIGURES 2-4 and 8-10. Once the necessary functions have thus been defined in functional block diagram form, those skilled in this art will readily understand how to program an appropriate digital signal processor (DSP) to implement those functions which, within any given block, are conventional and well known digital signal processing functions.

The use of a hybrid subband encoding/decoding algorithm is a major reason why the speech coding can, if desired, be accomplished on a single DSP integrated circuit chip having limited memory capacity (e.g., the NEC 7720). In addition, to further conserve the use of memory, the presently preferred exemplary embodiment implements the necessary time delay compensation after the encoding step (in the transmitter function) and before the decoding function (in the receiver function). By performing the required time delay compensation between the coder/decoder functions where the signals are most tightly compressed (e.g., where the fewest number of bits per second pass), the memory required to implement the time delay compensation is minimized as should now be appreciated.

There are, of course, other digital signal processors having less severe memory constraints which might alternatively be used to practice the present invention of hybrid subband encoding/decoding. It may be implemented, for example, using a main frame processor as the system signal processor. And plural DSP chips could also be utilized to achieve the hybrid subband coding of this invention. Thus, in situations where memory constraints are less critical but where, perhaps, some other equivalent constraint exists (e.g., a limited bandwidth communication channel), the use of hybrid subband coding/decoding techniques in accordance with the present invention can be utilized to provide significantly improved signal -to-noise ratio and/or other benefits.

In the functional block diagram of FIGURE 2, the input signal at 100 is already a digitized version of an input analog audio signal. For example, it may be a serial bit string coming from codec 22 in FIGURE 1 into an input buffer register of the DSP 24 of FIGURE 1. The signal present at input 100 will typically represent an input electrical signal having a frequency band of components (e.g., from about 180 to 2900 Hz).

Well known quadrature mirror filter (QMF) banks (e.g., the conventional non-symmetrical tree structure which simplifies and/or minimizes computational requirements for real time applications such as this) are utilized in the four-band QMF bank 102 of FIGURE 2. The QMF filters separate the input signal into plural channels of digital signals representing audio signal components in different subbands of frequency range. For example, as depicted In FIGURE 2, bands 1-4 represent a four-octave division of the 180-2900 Hz input bandwidth.

Typically, a well known QMF tree structure is utilized with $h_e$ and $h_o$ filter pairs being utilized in a non-symmetrical tree structure to separate the incoming digital signal into octavely related bands. Each filter pair basically comprises a tapped digital delay line. The first filter pair may, for example, provide the highest frequency band 4 and an input to a second filter pair. The output of the second filter pair then provides band 3 and an input to a third filter pair which, in turn, provides bond 2 and on input to yet a fourth pair of filters which, finally, produces band 1 output (the second output of the fourth filter pair is simply not used).

As will thus be noticed, bands 2, 3 and 4 have fewer filter elements contained in their signal path and therefore suitable time delay must be added in each such band so as to maintain time synchronization in the propagation of corresponding signal components in the different bands throughout the system. As will be appreciated, the necessary time delay compensation can be accomplished either at the transmit side or the receive side or divided as desired between both the transmit and receive sides. For example, if the four QMF filter pairs employed are 32, 16, 16, 16 point filters, then the corresponding time delay compensation for bands 4, 3 and 2 would be 49, 21 and 7 filter processing times, respectively. The exact value of the required time delay compensation depends upon the number of points used in each filter pair. For example, if 32, 16, 12, 8 point filter pairs are used, then the required time delay units would be 28, 11 and 3 for bands 4, 3 and 2, respectively. The general considerations and a formula for calculating such time delay compensation is set forth in the related and above-referenced Zinser et al paper.

Although such time delay compensation is conventionally performed immediately after QMF filtering, if it is desired to maximize conservation of digital memory requirements in the digital signal processor 24, then such time delay compensation may be made after the further bandwidth compression ADPCM/BCPCM encoding steps.

As also shown in FIGURE 2, the band 1 output of the QMF filter bank 102 is passed to a conventional 3-bit ADPCM encoder 104. The band 2 output is processed by a conventional 2-bit ADPCM encoder 106. The band 3 output from the QMF filter 102 is processed by a conventional 2-bit ADPCM encoder 108. However, the band 4 output from the QMF filter 102 passes to a BCPCM encoder 110 thus making the subband coder of a hybrid ADPCM/BCPCM type. As will be explained more fully below, APCM is merely a special case of ADPCM and, accordingly, either technique may be employed in the coders 104, 106 and 108.

The multiplexing function 112 depicted in FIGURE 2 takes the serial bit strings coming from encoders 104, 106, 108 and 110 and converts them into a single serial output bit string for passage along a digital communication channel. Typically, the multiplexing function 112 is implemented in the DSP 24 by simply buffering the serial outputs from the encoding processes 104-110 and then packing them in a predetermined order for output as a single serial bit string.

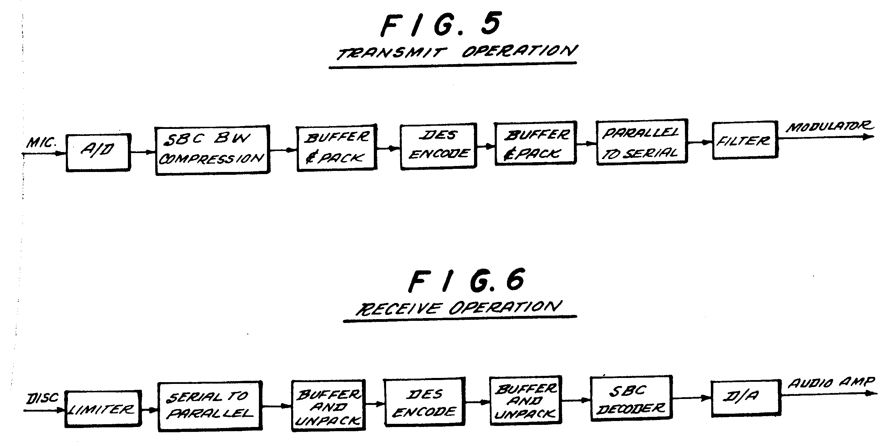

Although not depicted in FIGURE 2, if encryption of the transmitted bit string is desired, then the serial bit string from multiplexing function 112 passes to the DES circuits 26 for encoding in accordance with the DES encryption algorithm after which the resulting encoded data bytes are buffered and packed and then converted from bit-parallel to bit-serial form before being output through filter 34 to the transmitter modulator. This entire overall transmit operation from microphone to modulator is functionally depicted at FIGURE 5.

Whether DES encrypted or not, the receiver portion shown in FIGURE 2 will eventually be the recipient of a serial string of bits similar to those originally generated by the multiplex function 112. For example, as depicted in FIGURE 6, the incoming bit-serial string from the receiver discriminator typically passes through limiter 36 and then is converted from bit-serial to bit-parallel form before it is buffered, unpacked and processed conventionally by the DES circuits 26 so as to decrypt the incoming data and provide a decrypted serial string of bits to be buffered and unpacked (i.e., demultiplexed as indicated by function 114 in FIGURE 2) so as to produce an appropriate bit-serial string for each of the bands 1 through 4 to be decoded.

Bands 1 through 3 are, of course, decoded in accordance with a conventional ADPCM decoding algorithm while band 4 is decoded with a conventional BCPCM decoding algorithm as depicted in FIGURE 2. The resulting four strings of bit-serial decoded signals for bands 1-4 then pass through a conventional four-band QMF inverse filter bank 116 where they are combined into a single bit-serial output string. Finally, as depicted in FIGURE 6, the bit-serial output of the subband decoder passes through a conventional digital-to-analog converter (e.g., codec 22) to produce an audio analog signal suitable for processing by conventional receiver audio output circuits.

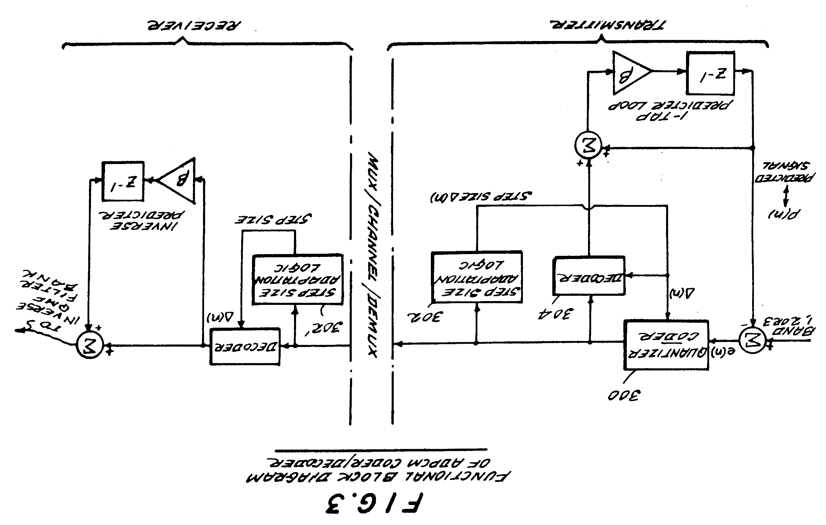

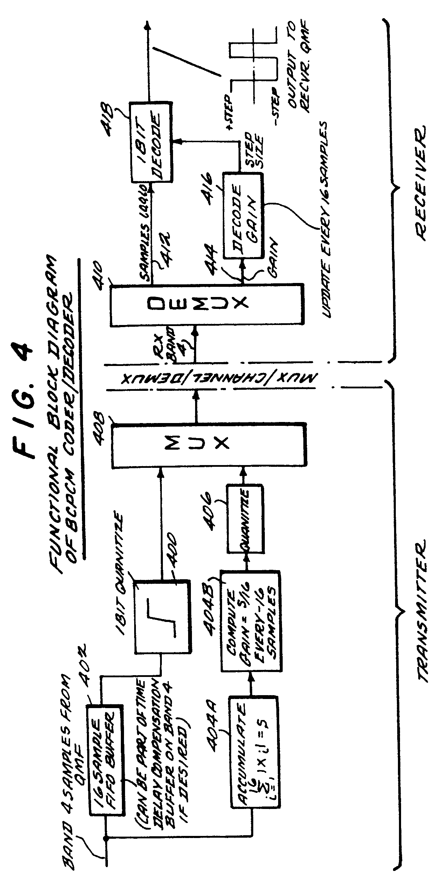

Although the ADPCM and BCPCM encoding/ decoding functions are conventional and well known in and of themselves (as is their straightforward implementation on programmable digital signal processors), these functions have been again depicted for easy reference at FIGURES 3 and 4.

For example, FIGURE 3 depicts a typical functional diagram of an ADPCM coder/decoder. If the digital output of quantizer/coder 300 is at the outer levels of its present range, then the step size adaptation logic 302 detects this fact and increases the step size used by the quantizer 300. On the other hand, if the quantizer 300 is detected as outputting only in the inner levels of the current range, then the step size is decreased. If only the quantizer 300 and the step size adaptation logic 302 are utilized, then the device Is actually an APCM coder. The addition of the decoder 304 and the rest of the 1-tap predictor loop depicted in FIGURE 3 (including the summation nodes) makes the coder an adaptive differential PCM coder. As should be appreciated, if the gain factor $\beta$ is made to equal zero, the ADPCM coder again becomes an APCM coder. As used in this application, the terms APCM and ADPCM are considered as being synonomous.

The step size adaptation logic 302' in the receiver of FIGURE 3 uses essentially the some logic based on the ongoing bit string values as does the logic 302 in the transmitter. However, because transmission errors occurring in the channel may cause incorrect adaptation in the receiver, on exponential decay factor is preferably used in both the transmitter logic 302 and the receiver logic 302' so as to damp out any such errors. More detail on the exponential decay feature may be had by reading the related above-referenced Zinser et al paper. In brief, the adaptation equation used by logic 302 and 302' say be of the following form:

$$d(n) = 0.98[d(n-1)] + m[I(n)] \qquad \text{(Equation 1)}$$

where

    d(n) is step size table pointer

    I(n) is quantizer level

    m[I(n)] is step size pointer update as a function of level.

The variable d(n) is typically constrained to be between the values 1 and 64. The step size [$\Delta(n)$] at time n is found by using the integer value of d(n) as an index to a look up table. The look up table contains 64 exponentially spaced step sizes that span the desired dynamic range of the system.

A typical m[I(n)] table for a 3-bit quantizer is:

## TABLE 1

| I(n) | M | |
|------|-----|------------|
| 1 | 8 | |
| 2 | 0 | |
| 3 | 0 | – numbers |
| 4 | -3 | |

----------------------------------- zero level

| | | |
|------|-----|------------|
| 5 | -3 | |
| 6 | 0 | |
| 7 | 0 | + numbers |
| 8 | 8 | |

**(More information can be found on this technique in Boddie, Ref. 11.)**

Once again, if the inverse predictor loop is simply omitted, one is left with APCM decoder. With it in place, one has a ADPCM decoder as should be apparent to those in the art.

A typical functional block diagram for a BCPCM coder/decoder is set forth at FIGURE 4. Here, the band 4 samples from the QMF filter are quantized at 400 to produce a simple serial bit string where each bit in she string represents either a plus or a minus sign directed step. The size of the step used for each block of 16 samples is derived by computing the average absolute value of those 16 samples via functions 404A and 404B. FIFO buffer 402 holds the 16 samples during the gain computation process; it ensures that the encoded samples and gain are received in synchrony at the receiver. This buffer register may also be used as a part of the time delay compensation buffer for bond 4. The result of the gain computation is then quantized at 406 (e.g., using 4 or 5 bits or the like) and then multiplexed at 408 so as to produce a bit-serial string for output to the frame multiplexer 112 shown in FIGURE 2.

After passage through the channel and the demultiplexer 114, the band 4 signals are demultiplexed at 410 into string of serial sign bits at 412 and a multibit quantized gain signal at 414 which is decoded at 416 to set the desired step size within decoder function 418. As indicated in FIGURE 4, increments using the decoded step size will be successively added and/or subtracted as successive sign bits are decoded at 418 so as to provide an output to the receiver QMF inverse filter bank 116 as shown in FIGURE 2.

As will be appreciated by those in the art, the effective sampling for each band should be equal to the Nyquist frequency for the highest frequency component within that band. The resulting data rates will be a function not only of the sampling rate but also of the number of bits used to represent each sample of the voice signal. For example, using an approximately 5800 Hz overall sampling rate, the following Table 2 illustrates one possible exemplary arrangement for achieving an overall data rate of 9600 bits per second over the communication channel. The bandwidth compression achieved at each successive point in the functional diagram of FIGURE 2 shows the type of overall bandwidth compression that may be achieved using hybrid subband coding.

## TABLE 2

| Band (Hz) | Sample Rate (Hz) | Bits/ Sample | Bits/Sec |
|---|---|---|---|
| 181-362.5 | 362.5 | 3 | 1087.5 |
| 362.5-725 | 725 | 2 | 1450 |
| 725-1450 | 1450 | 2 | 2900 |
| 1450-2900 | 2900 | 1.3125 | 3806.25 |
| | | Total SBC | 9243.75 |
| | Frame Sync & Header | | 356.25 |
| | | Data Rate | 9600 |

As will be appreciated, synchronization signals and perhaps other "overhead" Information is typically also multiplexed into the transmitted serial stream and allowances ore thus made for same in Table 2.

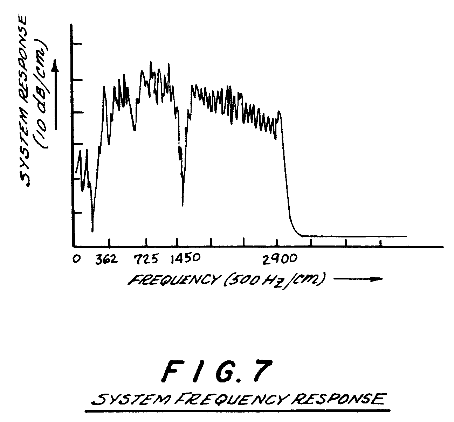

Because relatively coarse quantizing steps are utilized in this exemplary embodiment, it is believed preferable that the subbands do not actually overlap. Accordingly, the juncture between the subbands will actually lie on a depression in the overall frequency response characteristic of the entire system. For example, as shown in FIGURE 7, the juncture between the subbands within the overall frequency response of the system may occur at points that are a number of decibels below the peak in-band bandpass levels.

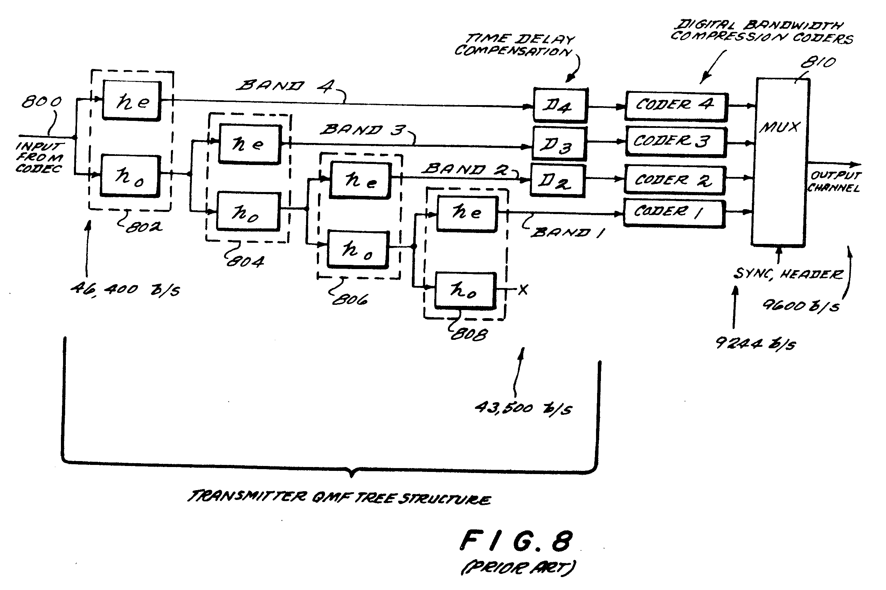

As noted above, a number of subband coder/decoder implementations using programmed digital signal processors have already been discussed in the prior art. However, those which use a non-symmetrical QMF tree structure appear to always provide time delay compensation directly time-adjacent to the QMF functions as depicted in FIGURE 8. Here, a time-sampled input signal at 800 is divided into multiple subband digital signals on bands 1, 2, 3 and 4 where the digital signals at each band represent a particular frequency band of the original signal. Thus, the frequency spectrum of the original input waveform (e.g. an analog audio signal input to a Codec giving rise to a digitized serial bit stream at input 800) is divided into four subbands using four conventional quadrature mirror filter pairs 802, 804, 806 and 808. A simplified depiction of the QMF filter pair functions is provided in FIGURE 8 since they are already well known in the art.

In accordance with prior art techniques, each subband channel of digital signals is encoded using some technique which provides bandwidth reduction. For example, adaptive differential pulse code modulation (ADPCM) or simply adaptive pulse code modulation (APCM) or block companded pulse code modulation (BCPCM), etc. Digital bandwidth compression coders 1-4 are depicted in FIGURE 8 as processing the respective subband channels 1-4 before the compressed digital signals are multiplexed (e.g. buffered and packed in a given sequence) at 110 to provide a bit serial string of digital signals representing discrete time segments of the original waveform. As schematically indicated at FIGURE 8, appropriate synchronization and other header or "overhead" bits are typically also multiplexed into and passed over the output channel.

Superimposed on FIGURE 8 are typical representative bit rates that may be involved at different points in the circuit. For example, there might be on the order of 46,400 bits per second present at the input 800 while the combined QMF filter outputs on all four subbands may equal approximately 43,500 bits per second. It will be noted that a significant 4.7:1 reduction in the bit rate occurs after the coders where four subband channels now comprise a total of 9,244 bits per second. Once additional sync and header bits and the like are added, the output channel say typically comprise 9,600 bits per second.

In any event, it will be noted that if time delay compensation is effected before bandwidth compression, significantly more bits will have to be stored over the desired time delay so as to achieve that desired time delay compensation in the various subband channels.

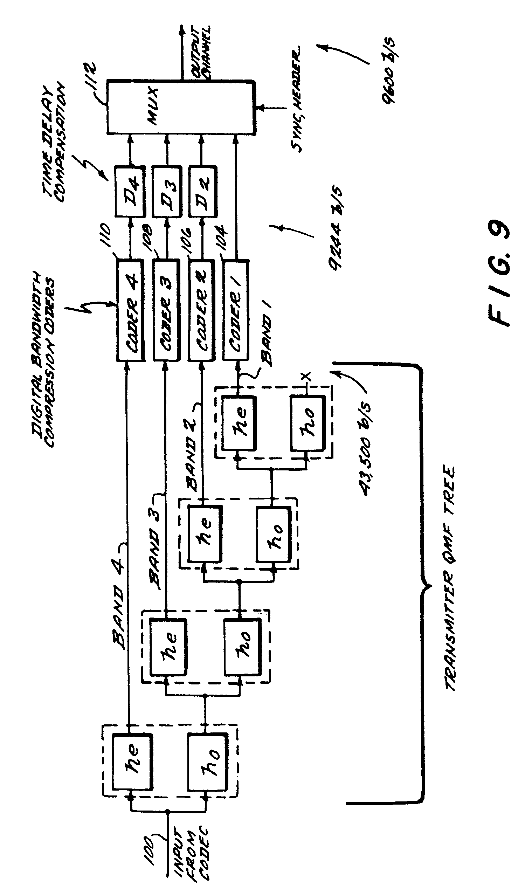

On the other hand, if time delay compensation is provided after digital bandwidth compression by coders 2-4 (no time delay compensation is actually needed in subband 1 as it is already delayed more than the other subbands due to the extra filtering functions therein) as depicted in FIGURE 9, then significantly fewer bits need be stored for the requisite time delays. In particular, in the exemplary embodiment, an improvement of approximately 10.4:1 in memory requirements con be obtained by performing time delay compensation on the digitally bandwidth compressed information flow rather than otherwise (as was conventional and as depicted in FIGURE 8). For example, using the Zinser et al formula for calculating required subband delays, conventional practice in the exemplary embodiment would typically require use of $33 + 13 + 3 = 49$ sixteen bit words of RAM on the DSP integrated circuit chip. However the present invention requires only $[33(21/16) + 13(2) + 3(2)]/16 = 4.7$ sixteen bit words of RAM to realize the same needed time delays. This is a most significant 10.4 to 1 reduction in on-chip DSP delay memory requirements which can then be advantageously employed for other needed DSP functions.

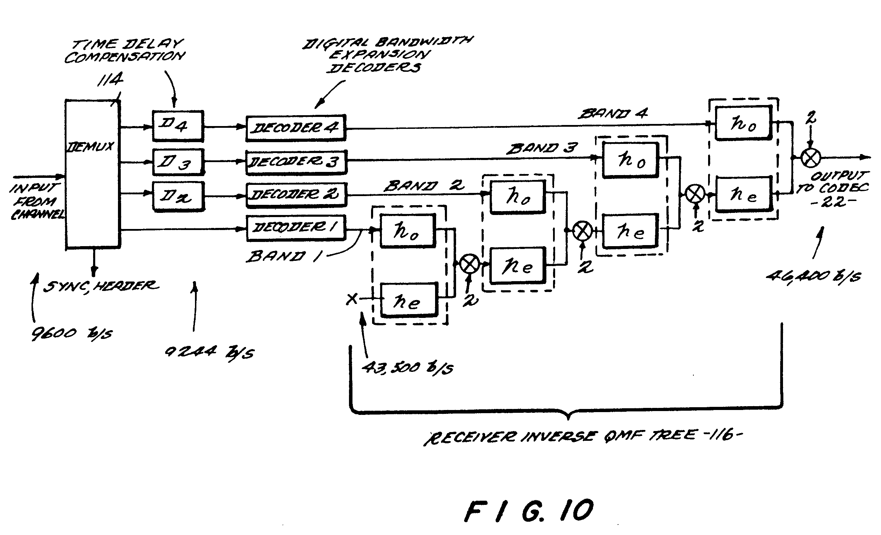

For proper reconstruction of the original signal at the receiver (see functional diagram of FIGURE 10), it is imperative that the various subband signals arrive at their respective decoders 1-4 in proper time synchronism with respect to one another.

In a straightforward elementary implementation of subband coding, simple bandpass filters of the same order (e.g. each introducing the same number of delay stages) may be used in a symmetrical fashion such that all the subband signals remain in time synchronism. This implementation is however cumbersome and inefficient for real time signal processing. A much more efficient approach utilizes the efficient polyphase structures for implementing band splitting quadrature mirror filter trees as shown in FIGURES 8-10. Here, the band splitting function as well as decimation (by virtue of alternate sampling of the filter inputs between the $h_e$, $h_o$ sections) is simultaneously obtained. The implementation is computationally are efficient but unless compensating time delays are introduced into the various subband channels having lesser numbers of filtering steps, then the signals in the various subbands will not be time synchronous. The number of delay stages required will depend on the order of the filters but typically 50 or more delay stages may be required for a four subband coder implementation. If time delay compensation is achieved as in the prior art FIGURE 8 manner at a point where the signals have not yet been bandwidth compressed to any great degree, a relatively large number of bits must be stored for the requisite time delays (e.g. $50 \times 16 = 800$ for a 16 bit architecture).

However, using this invention as depicted in FIGURE 9, the digital storage required for implementing the time delay compensation is significantly reduced. This is accomplished by performing time delay compensation only after significant digital bandwidth compression has already occurred thus permitting the data to be more efficiently packed into the discrete word lengths of digital memory available in the DSP (or other specialized hardware, if desired). The coders 1-4 provide bandwidth reduction by virtue of simply reducing the number of bits used to represent each sample of the original input signal. These reduced numbers of bits can then be shifted into RAM storage on conventional DSP integrated circuits and thus tightly packed so as to effect a large savings in the memory required for delay equalization.

Although the required time delay compensation night be accomplished entirely during the transmitter functions as depicted in FIGURE 9, it might also, or alternatively, be wholly or partially accomplished during implementation of the receiver functions as indicated in FIGURE 10. For example, as depicted in FIGURE 10, the time delay compensation is again achieved at a point in the signal processing functions where relatively fewer numbers of bits need be stored to effect the desired time delay compensation. In particular, time delay compensation is effected somewhere between the coders 1-4 of the transmitter shown in FIGURE 9 and the decoders 1-4 of the receiver shown in FIGURE 10.

As should be appreciated, the reconstructed digital output signal stream may be in either bit- serial or bit-parallel (i.e. byte) format as may be required for input to codec 22.

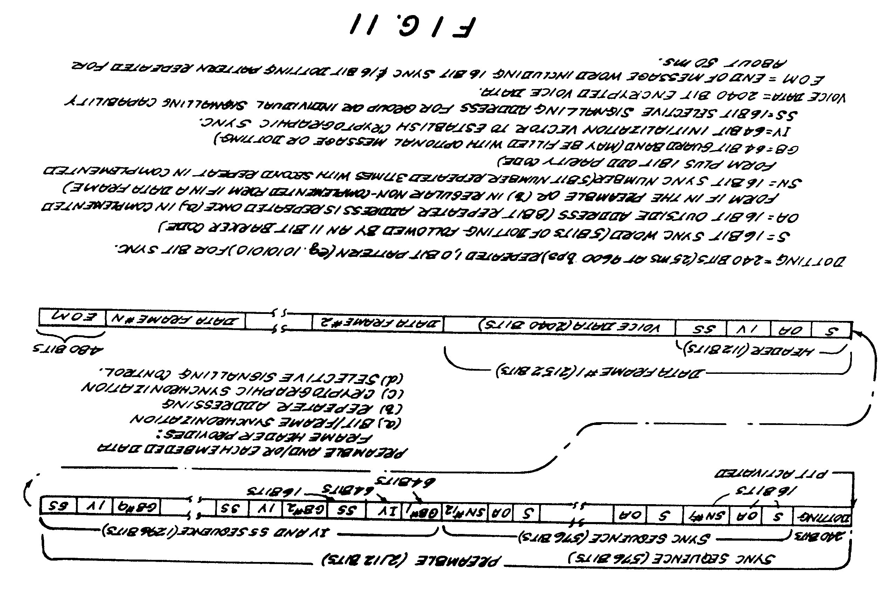

The preferred time sequence of digital signals being transmitted by transmitter 10 or received via receiver 12 is schematically depicted in FIGURE 11. This format or time sequence of digital signals is generated for transmission under program control of the microprocessor 14 and, in the receive mode, the control microprocessor 14 is also programmed (e.g. via ROM 30) so as to properly detect and decode the same time sequence or format of digital signals. This unique format permits initial and ongoing frame synchronization, repeater addressing, cryptographic synchronization and selective signalling. All four types of information are repetitively transmitted in a relatively long preamble portion for fade protection (e.g. the usual Raleigh fading which may be expected on radio frequency communication channels) and, in addition, all four types of information are repeatedly retransmitted at regular intervals within the encrypted voice data stream. Fade protecting the preamble by multiple repeats and/or other techniques provides a very high probability of correct initial synchronization and addressing functions. Repeating all four types of information within the voice data stream permits late entry (in the event that the preamble is missed or unsuccessfully decoded) and/or permits recovery of synchronization (in the event that synchronization initially acquired from the preamble is subsequently lost before the end of a given message occurs).

When the transceiver of FIGURE 1 is in the "private" mode and the PTT switch is activated, the preamble portion of the format shown in FIGURE 11 is first transmitted so as to establish bit synchronization, word or frame synchronization, cryptographic synchronization and addressing (e.g. repeater and/or other selective signalling). Fade protection for deep fading (e.g. up to 45 milliseconds) is preferably provided by multiple repeats of a synchronization sequence as well as the initialization vector (IV) and selective signalling (SS) signals.

The initial "dotting" sequence is merely an alternating 1,0 pattern of digital signals (e.g. 10101010...) and is continued for a "transmitter wake-up time" (e.g. 25 milliseconds). During this initial "dotting" time, the receiver circuits can quickly obtain bit synchronization. For example, conventional hardwired bit synchronization circuits might be utilized in the transmit/receive interface 32 as previously described so as to automatically obtain and remain in bit synchronization with the incoming serial stream of digital signals. Those skilled in the art will appreciate that logic 1's and 0's may be interchanged throughout this discussion since they refer only to two binary levels and not to a rigid voltage polarity or magnitude.

The synchronization sequence next occurs for a time duration equal to the sum of: (a) the maximum expected fade duration, (b) the bit duration required to ensure 99% synchronization acquisition, and (c) the typical time required for repeater turnon to occur. The exemplary synchronization sequence includes 12 repeats of 48 bit synchronization groups, each of which groups includes a 16 bit synchronization word S (an 11 bit Barker code such as 11100010010 and 5 bits of fill or dotting), an 8 bit "outside address" (OA) repeated once in complemented form (which may alternatively comprise other internal data configurations such as a 5 bit repeater address repeated twice plus filler) to complete a second 16 bit field and a 5 bit sync number (SN) repeated three times (with the second repeat being in complemented form) plus 1 final bit of odd parity code so as to complete the third 16 bit field in a given 48 bit group. At 9600 baud, it requires approximately 60 milliseconds ((48 x 12)/9600) to transmit all 576 bits of the synchronization sequence in the preamble of FIGURE 11.

Once a correct synchronization word S is decoded, the following OA and SN fields may be recognized by requiring that all the vectors within each field (2 in the OA field and 3 in the SN field) match (i.e. taking into accouant the complemented form of adjacent repeated vectors) to ensure proper frame synchronization and/or that sufficiently error free reception is being enjoyed. (Late entry is differentiated from preamble entry by the format of the OA field.) The proper syncronization number SN is reconstructed by voting 2 of 3 on the three 5 bit vector fields. The synchronization number data SN not only helps establish the current or instantaneous position within the synchronization sequence, it also helps ensure that the correct boundary is identified between the sync sequence and the following IV and SS signal sequence as shown in FIGURE 11.

The IV and SS fields follow the synchronization sequence in the preamble of FIGURE 11. This second control data sequence includes a 64 bit guard band (GB), a 64 bit initialization vector (IV) and a 16 bit selective signalling address (SS) repeated 9 times in the overall IV and SS sequence of 1296 bits depicted in FIGURE 11. The 64 bit guard band GB provides fade protection while the 64 bit IV field is used to establish cryptographic synchronization in accordance with the conventional DES. The 16 bit selective signalling field SS provides group and individual selective signalling capability within a radio communication network.

The IV and SS sequence subsists for a time duration equal to the sum of: (a) the time required for transmitting the initialization vector IV, (b) the time required for selective signalling transmissions SS, and (c) the degree of fade protection desired for the SS/IV control data fields. In the exemplary embodiment, approximately 45 milliseconds of fade margin is provided in the IV and SS sequence of 1296 bits.

The selective signalling vector SS may be used for selective calling of individuals or groups using the same DES cryptographic key. Accordingly, truly selective signalling capability is provided within a cryptographic communication network. The 16 bit SS field may represent, for example, a user group with individual addresses therewithin so that users with the same cryptographic key nevertheless have the ability to further subdivide their calls to subsets or individual transceivers within their particular network. For example, the SS field may also be encrypted to facilitate selective signalling within a group of users having the same DES key while providing no information to a user with a different key (or an evesdropper).

The guard band GB may be used for additional message or signalling capabilities if desired but, in the present exemplary embodiment, it is merely filled with a dotting pattern. 64 bits of dotting was chosen so as to provide a fade margin of approximately 45 milliseconds.

The DES initialization vector IV conventionally contains 64 bits and is a pseudorandomly generated initialization vector used by the conventional DES encryption algorithm to initialize the cypherstream generation.

A "five-of-nine" vote is utilized for analyzing the 9 times repeated IV/SS data sequence. For example, at the receiver each of the nine sequential GB/IV/SS data fields is voted bit-by-bit on an at least five-out-of-nine basis. The voted results are stored as used as the correct IV/SS vectors for cryptographic synchronization and selective signalling purposes.

The preamble format of FIGURE 11 is chosen so as to provide a 99% probability of correct reception in a radio frequency communication channel experiencing up to about 3% bit error rate (BER). In this analysis, fading is treated as a separate process and dealt with by interleaving redundant data (or left "open" by using all 1's or all 0's, any arbitrary pattern or simply dotted guard bands) along with repeated critical synchronization data as shown in FIGURE 11. For example, the FIGURE 11 format is designed so as to protect against data losses even though up to about 45 milliseconds of fading may occur on the radio frequency communication channel. The probability of correct reception for the required information is then the product of the probabilities of the individual fields.

Thus if Pch is the probability of the correct preamble reception, then

$$Pch = (Pcs * Pcoa * Pcsn) * Pcss * Pciv \qquad \text{[Equation 2]}$$

where,
    Pcs is the probability of correct sync S reception;
    Pcoa is the probability of correct OA reception;
    Pcsn is the probability of correct sync number SN reception;
    Pcss is the probability of correct selective signalling SS address reception; end
    Pciv is the probability of correct initialization vector IV reception.
    Assuming a 3% BER and the FIGURE 11 format:
    (a) for a repeater receiver or a mobile receiver;

$$Pcs * Pcoa * Pcsn = 0.98964 \qquad \text{[Equation 3]}$$

(b) for a mobile receiver (the repeater may not require IV and SS);

$$Pcss * Pciv = 0.99978 \qquad \text{[Equation 4]}$$

(c) for the repeater, probability of correct acquisition is

$$Pcra = 0.98964 \qquad \text{[Equation 5]}$$

(d) for a mobile, probability of correct reception of the preamble is

$$Pcma = 0.98964 * 0.99978 \qquad \text{[Equation 6]}$$

$$Pcma = 0.98845 \qquad \text{[Equation 7]}$$

The format of FIGURE 11 typically provides:
- Initial entry time of about 250 msecs,
- Rentry (in case of temporary sync loss)
- Late entry capability

- Probability of correct detection of the header >99% at a channel BER or 3%
- Protection against fades of up to about 50 msecs duration
- Falsing rate of less than about once per week.

The output feedback mode of operation of the DES algorithm requires that a 64-bit vector be transmitted every frame period. This vector is different for each transmission thereby constituting 1 out of $2^{64}$ possible vectors. The vector is called an initialization vector or IV.

The reconstructed SS and IV vectors are the result of voting at least 5-of-9 on the available group of 9 vectors as previously described. The process of voting at least 5-out-of-9 on the incoming data stream has the effect of improving the effective bit error rate (BER) of the channel. For a given channel error rate Pe, the probability of correct reception where the probability of correct IV and SS reception Pciv*Pcss can be calculated as:

$$Pcss*Pciv = \left[ \sum_{k=5}^{9} \binom{9}{k} (Pe)^k (1-Pe)^{9-k} \right]^{80} \qquad \text{[Equation 8]}$$

For Pe = .03 (3% BER), then Pciv*Pcss works out as .99978 or 99.98% probability of correct reception.

Correct sync S (11 bit Barker code) reception is ensured by repeating the 11 bits of the Barker code with a 5 bit fill continuously over a finite period. This time was chosen as the sum of the worst case (expected) fade duration and the time taken to repeat the sync pattern so that the probability of correct reception is at least 99% at a 3% BER.

The probability that 27 bits will be correct at a 3% BER, is simply $(1-0.03)^{27}$ or .439, i.e. the probability that the sync is corrupted is (1-0.439) or .561. Thus the probability that the sync is corrupted n times in a row is $(0.561)^n$ or the probability of correct sync under these conditions is $1-(0.561)^n$. This is required to be at least 0.99 in the exemplary embodiment. The value of n satisfying the above equation is at least 8 (12 is used in the exemplary embodiment and is thus more than ample). The probability of correct sync S and OA is 0.99902.

The probability of correct preamble reception under these conditions is

Pch = Pcs * Pcsiv = 0.99902 * 0.99 * 0.99978 = 0.9899 = ~0.99.

Following the preamble shown in FIGURE 11 are successive data frames, each of which includes a 112 bit header portion and 2040 bits of encrypted voice data. The header includes a single repeat of the sync word S, the outside address OA, the initialization vector IV and the selective signalling address SS. No sync count number SN is provided nor are multiple repeats provided in an attempt to keep the overall data frame length as low as possible (e.g. on the order of 225 milliseconds) and/or to keep the required data processing overhead to a minimum during the time it is necessary to also decode and otherwise process the incoming encrypted voice data.

Nevertheless, by inserting such a header into each data frame, enough information is regularly provided so as to allow for late entry into on ongoing message or conversation and/or so as to reestablish lost frame or cryptographic synchronization (e.g. as might occur from temporary loss of signal or multiple transmitting conditions or the like on a typical radio frequency communication channel). A synchronization maintenance control function in the receiver may thus monitor the ongoing received data frame header. It may permit a certain amount of "free wheeling" even if a bad header is sometimes detected since the critical cryptographic initialization vector IV can be predicted from the previously received (correct) IV. Once cryptographic synchronization has been completely lost, the preferred exemplary embodiment requires two valid received IV's (in consecutive data frames) to be detected before proper cryptographic synchronization is resumed.

As also depicted in FIGURE 11, an end of message (EOM) signal is transmitted at the end of a message transmission (e.g. upon release of the PTT switch 20). The EOM signal is continued for about 50 milliseconds in the exemplary embodiment so as to allow for relatively long fades in the received signal while still ensuring that the EOM is properly decoded.

In the format of FIGURE 11, the sync word S should preferably preceed the other associated fields (e.g. OA, IV, SS) so as to permit frame sync acquisition before the other fields are to be detected. However, the exact order of the remaining OA, IV, SS fields is essentially a matter of choice.

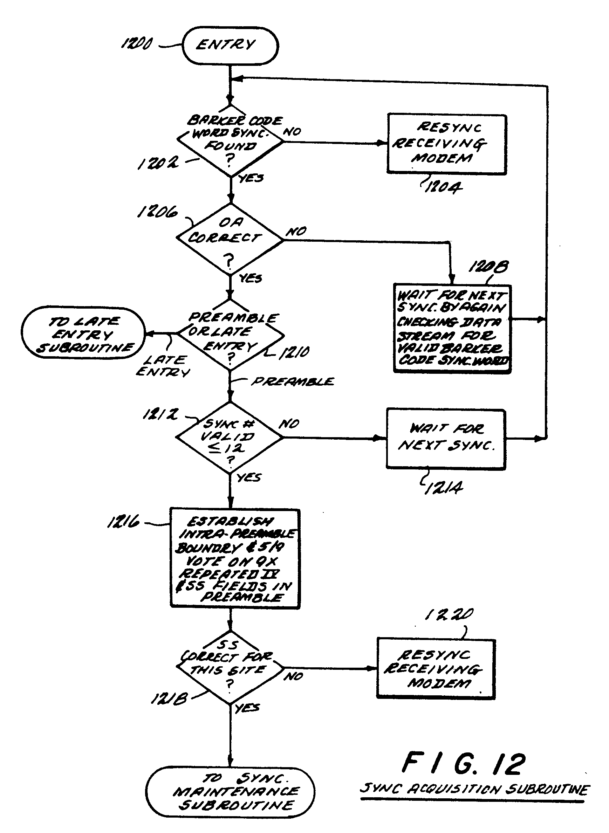

Those skilled in the art should be able to readily devise transmission control programs for the microprocessor 14 required to assemble and transmit data streams in accordance with the time sequences depicted in FIGURE 11. However, since the reception processing control is somewhat more involved, an exemplary embodiment of suitable computer program subroutines is presented in FIGURES 12-14 for causing the microprocessor control system of FIGURE 1 to properly receive and decode the time sequence of digital signals depicted in FIGURE 11.

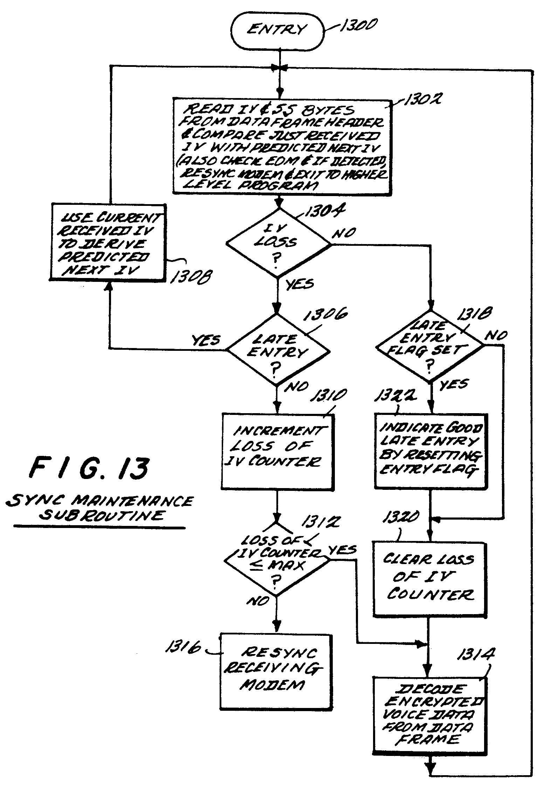

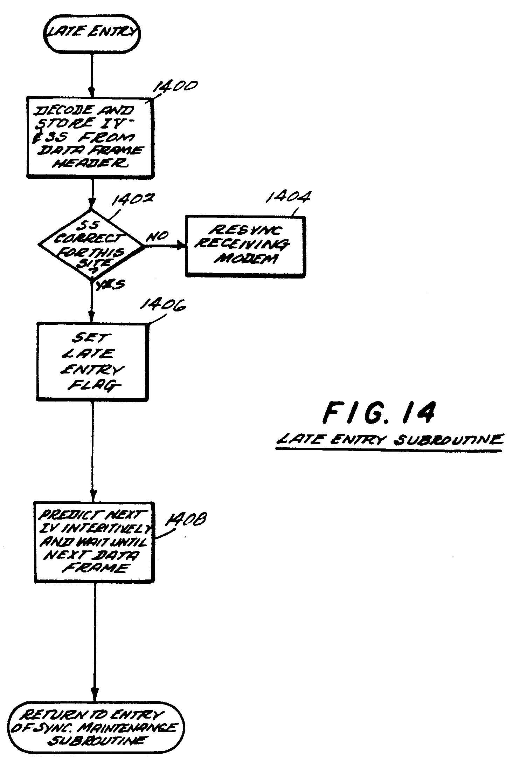

The receive control functions required by the digital signal format of FIGURE 11 may be divided into two major functional computer program subroutines: (a) a synchronization acquisition subroutine as shown in FIGURE 12, and (b) a synchronization maintenance subroutine as shown in FIGURE 13. A lower level "late entry" subroutine shown in FIGURE 14 is utilized in conjunction with the other programs of FIGURES 12 and 13 so as to permit successful late entry into an ongoing conversation.

A repeated hardwired test is made for presence of the 11 bit Barker code synchronization word S in the transmit/receive interface 32 irrespective of the private/clear mode status thus enabling automatic reception of either DES encoded digital voice or normal analog voice transmissions. Then, whenever decoded voice is present, the control microprocessor 14 itself automatically switches 52 into a "private" receive mode. A suitable visual or other indicator of this automatically derived "private" mode may also be activated by the control microprocessor. (If desired, the transmit portion of switches S1, S2 may also be automatically switched to the "private" mode in readiness for any return transmission.) As will be recalled, the transmit/receive interface 32 of FIGURE 1 is preferably hardwired so as to automatically recognize the appropriate Barker code word and to generate an appropriate priority interrupt signal for the microprocessor 14 which then abruptly switches control to entry point 1200 of the sync acquisition subroutine.

Alternatively, the transmit/receive interface 32 may provide a simple multibit register through which the incoming bit stream passes and which is periodically sampled by microprocessor 14 at block 1202. If the proper Barker code word is not yet received, then the incoming bit stream may be advanced by one or more bits in the interface buffer at 1204 and another test made for the proper Barker code at 1202. In the preferred exemplary embodiment, the test at 1202 should always simply confirm that a proper Barker code sync word is present since that is the condition upon which control is passed to entry point 1200. If not, then the interface 32 is replaced in its sync search mode and control of microprocessor 14 is passed back to higher level programs until the next priority interrupt is produced by interface 32 signifying that another proper sync word S has been detected. As should be appreciated, the interface 32 is preferably wired to inhibit generation of any subsequent priority interrupt until it is again placed in a sync search mode. Otherwise, a priority interrupt would always be generated whenever an incoming S word occurs. It should also be recalled that bit synchronization is typically handled by conventional fixed hardware in the transmit/receive interface 32.

When a correct Barker code synchronization word S has been detected at 1202, control passes to 1206 where a check is made for a proper outside address OA. In other words, is the OA correct for the particular transceiver site in question? If not, then control is passed to wait loop block 1208 where microprocessor 14 now waits for the next sync word S which is tested again at 1202.

If both a valid synchronization word S and valid outside address OA are detected at blocks 1202 and 1206, then a test is made at 1210 to determine whether the S and OA data just received comes from the preamble of FIGURE 11 or from a data frame header which, in the latter case, would indicate that a late entry is being attempted to an ongoing message. As explained earlier, the OA field includes two 8bit vectors. In the preamble, the second vector is the logical complement of the first vector. However, in the data frame header the second vector is merely a straightforward repeat of the first vector.

Accordingly, a test may be made at block 1210 to see whether the second vector in the just received OA field is inverted. If it is, then exit is made to the late entry subroutine of FIGURE 14 as indicated. If not, then a normal sync acquisition from the preamble is indicated and control is passed onto block 1212 where a test is made to determine if the synchronization number SN is a valid number (e.g. do the three 5-bit vectors and odd parity code bit check out with respect to one another and, if so, is the indicated sync number less than or equal to 12?). If the sync number SN is not valid, then exit is taken via wait loop 1214 back to block 1202 to wait for the next valid Barker code synchronization word S.

However, if a valid synchronization number SN is detected at 1212, then control is passed to block 1216 where the data field boundaries within the preamble are now established (e.g. because one now knows which one of the 12 repeated S/OA/SN fields has just been successfully detected and where it is located in the interface buffer register). The nine repeated GB/IV/SS fields in the IV and SS sequence of the preamble are then received and a vote is taken among the nine repeats of the IV and SS data fields. In the exemplary embodiment, a simple majority vote (e.g. at least 5 out of 9) is taken on a bit-by-bit basis to determine the final IV and SS field values for later usage by microprocessor 14.

After the voted SS field is available, control is next passed to block 1218 where the SS field is tested to make sure that it is correct for this particular transceiver/site. If not, then exit may be taken via block 1220 where the receiving modem in interface 32 is again placed in the sync search mode where a search is undertaken for the next correct Barker code word.

Finally, if the entire sync acquisition subroutine of FIGURE 12 has been successfully completed, then exit from block 1218 will be made to begin actually decoding the data frames which follow so as to drive the receiver audio output circuits. However, since the first portion of each data frame in the exemplary embodiment is a header portion which repeats the S/OA/IV/SS fields, exit from the FIGURE 12 subroutine may, if desired, simply be taken to the synchronization maintenance subroutine of FIGURE 13 where control of the microprocessor 14 normally resides anyway during the ongoing receipt of a succession of data frames.

Upon entry to the sync maintenance subroutine of FIGURE 13 et block 1300, control is passed to block 1302 where the IV end SS fields from the currently received date frame header are read into a buffer register end the just received cryptographic initialization vector IV is compared to the predicted next IV. As will be appreciated by those in the art, the conventional DES algorithm permits one to predict the next IV based upon the previous IV. For the very first date frame, the IV in the header should be the same as the IV already received and voted upon from the preamble. Thus, so as to accommodate the first data frame, an initial housekeeping operation might be performed (e.g. beck in the sync acquisition subroutine so as to initially set the predicted next IV to be equal to the voted upon preamble IV).

Additionally, block 1302 may include a test for the end of message character EOM since this would be a convenient place to make such detection. If detected, then the interface 32 may again be placed in the sync search mode end control of microprocessor 14 passed back to higher level programs.

The actual comparison of the currently received IV with the predicted next IV is depicted at block 1304 in FIGURE 13. If the two do not match, then an IV loss is indicated and control is passed to block 1306 where a test is made to see if a late entry flag has previously been set (by the late entry subroutine of FIGURE 14 to be discussed later). If the late entry flag was set, then exit is taken to block 208 where the current received IV is used to derive a predicted next IV and control is passed back to block 1302.

On the other hand, if the late entry flag was not set, then control is passed from block 1306 to block 1310 where a "loss of IV" counter is incremented. The counter contents is then tested at 1312 to see if it is less than or equal to some desired maximum. In the exemplary embodiment, the maximum may be set at a value up to 10. If the "loss of IV" counter has not yet exceeded the maximum permitted contents, then exit is made to block 1314 where the currently received encrypted voice data field is decoded using conventional DES algorithms. The decoded results are then conventionally also passed on to codec 22 which drives the analog receiver audio output circuits as should now be appreciated by those in the art and control is passed back to block 1302 of the sync maintenance subroutine for processing the next data frame of the incoming message.

If the "loss of IV" counter exceeds the maximum permitted value as tested at block 1312, then this indicates a loss of sync and, as a result, the interface 32 is again placed in its sync search mode and control is passed back to higher level programs as indicated by block 1316.

Under normal circumstances, when there is no IV loss as tested at block 1304, then control is passed to block 1318 where a test is made on the late entry flag. If the late entry flag has not been set, then control is passed directly to block 1320 where the "loss of IV" counter is cleared (just in case it sight have previously accumulated some content) and control is passed onto block 1314 where the encrypted voice data field is decoded, etc. as previously described. On the other hand, if the late entry flag was set as tested at block 1318, then the late entry flag is reset at block 1322 so as to indicate a good late entry sync acquisition. As should now be appreciated, during normal message reception times, control of microprocessor 14 repeatedly passes about the loop comprising blocks 1302, 1304, 1318, 1320 and 1314.

If exit is made to the late entry subroutine from block 1310 of FIGURE 12, then control is passed to block 1400 of FIGURE 14 where the IV and SS fields are decoded and stored from the currently received data frame header. A test is made at 1402 to see if the SS field is correct for this particular transceiver/site. If not, then the interface 32 is again placed in its sync search mode and control is passed back to higher level programs as indicated by block 1404.

On the other hand, if the SS field is detected as being correct at block 1402, then the late entry flag is set it block 1406 and the next initialization vector IV will then be iteratively predicted at block 1408 in accordance with conventional DES algorithms and a wait loop maintained until the next data frame time whereupon a return is mode to the entry of the sync maintenance subroutine in FIGURE 13.

To summarize the control algorithm represented by the flowcharts of FIGURES 12-14, initial sync acquisition involves acquisition of the 11-bit Barker code to establish word synchronization. The hardwired interface circuits 32 detect the Barker code word and priority interrupt the microprocessor 14 whereupon control passes to the sync acquisition subroutine of FIGURE 12. The repeater address or outside address field OA and the other following fields are then subsequently acquired and temporarily held in a suitable buffer storage. The information thus held in the buffer will have a unique characteristic identifying it as having come from the preamble or from the header of a regular data frame. In the exemplary embodiment, such differentiation is provided by causing the second or repeated vector in the outside address OA field to be inverted in the preamble but not inverted in the header of a regular data field. Thus, a test can be made at block 1210 of FIGURE 12 to determine whether the incoming S and OA fields originated from a preamble or from the header of a data frame.

If sync acquisition is made during the preamble (as should normally occur), the next occurring 16-bit SN field is grouped into three 5-bit fields and a single odd parity bit field. In the exemplary embodiment, the second 5-bit vector is inverted but otherwise the three 5-bit vectors should match if correctly received and the value of the 5-bit vector identifies which one of the 12 repeated synchronization packets (i.e. S/OA/SN) has just been successfully received. This permits the correct boundary to be established between the 576-bit sync sequence and the 1296-bit IV/SS sequence of the preamble. Once this boundary has been established, then the 9-way redundant GB/IV/SS data stream may be properly framed, received and a majority vote process performed so as to provide a degree of error correction in the resultant initially received IV and SS data fields. The error corrected SS address is then checked for proper identification and, if correct, then the error corrected IV may be used for DES decryption of the encrypted voice data field.

On the other hand, if successful sync acquisition is not made during receipt of a preamble to a message, then a "late entry" situation is indicated. This may occur, for example, because the receiver was somehow "late" in acquiring synchronization either by missing the preamble altogether or by having temporarily lost sufficient RF signal due to a long fade situation in a RF communication channel. In such case, the fields following the OA of the data frame header are the IV and SS fields. If the SS field correctly checks out (i.e. indicating that the message is indeed intended for this particular receiver), then a late entry flag is set and the incoming IV data from the data frame header is stored. This first received IV from a data frame header is not used immediately for voice data decryption but, rather, is used only to predict the IV for the next frame. Thus, a wait is made for the next frame where entry to the sync maintenance subroutine provides the IV received from the next data frame.

If the late entry flag is set, and the predicted and currently received IV's do not match, then the current IV is merely used as the "seed" for the next predicted IV to be used in the sync maintenance subroutine while continuing to inhibit the audio output. Accordingly, in the case of a late entry, two successive correctly received IV's are required before audio output is permitted to occur.

During sync maintenance (for either type of sync acquisition) the just received incoming IV stream is compared to the predicted new IV internally generated in accordance with the DES algorithm. If the late entry flag was set and a good IV comparison is made, then the sync loss counter is cleared and the correct IV may be used to generate a DES decryption vector (e.g. using the DES key from memory 28) in accordance with conventional DES algorithms.

During steady state, the receiver continues to decrypt the encrypted voice stream. Furthermore, if during steady state operation the predicted IV does not properly compare with the currently received IV, a sync loss counter is incremented and when the value exceeds a maxim (e.g. 10), the receiver is assumed to have dropped out of synchronization and attempts are then made to resynchronize the receiver with the incoming data stream. Accordingly, in the exemplary embodiment, once a steady state operation has been achieved, the receiver can "coast" for about 10 data frames (e.g. about 2.25 seconds) before synchronization is considered to have been completely lost.

## Claims

1.  A hybrid subband electrical signal processor comprising:

    filter means (102) having an input for accepting digital electrical signals representing a band of frequency components and providing four octave subband outputs covering an overall frequency band of approximately 180 to 2900 Hz;

    first digital encoder means (104,106,108) for receiving the three lowest frequency octave digital subband signals from said outputs and for encoding each such received subband in accordance with an APCM or ADPCM encoding algorithm to produce first encoded digital signals;

    second digital encoder means (110) for receiving the highest octave digital subband signals from another one of said outputs and for encoding such received subband signals in accordance with a BCPCM encoding algorithm to produce second encoded digital signals; and

    multiplex means (112) for combining said first and second encoded digital signals into a common

18

string of digital signals for transmission over a digital signal communication channel.

2. A hybrid subband electrical signal processor as in claim 1 wherein the highest octave subband output is BCPCM encoded using a 1-bit BCPCM quantizer.

3. A hybrid subband electrical signal processor as in claim 1 or 2 further comprising:

demultiplex means (114) for separating an incoming bit-serial string of digital signals into plural subband channels having therein encoded incoming digital signals representing signal components within different frequency subbands;

first digital decoder means for receiving said encoded incoming digital signals in at least one of said subband channels and producing decoded incoming digital signals therefrom in accordance with an APCM or ADPCM decoding algorithm;

second digital decoder means for receiving said encoded incoming digital signals in at least one other of said subband channels and producing decoded incoming digital signals therefrom in accordance with a BCPCM decoding algorithm;

inverse filter means (116) for accepting said decoded incoming digital signals from each subband channel and for producing a decoded string of digital signals.

4. A hybrid subband electrical signal processor as in claim 3 wherein said inverse filter means (116) combines four octave subbands covering an overall frequency band of approximately 180 to 2900 Hz and wherein the highest frequency subband is BCPCM decoded while the three lowest frequency subbands are APCM or ADPCM decoded.

5. A cryptographic digital signal transceiver including a hybrid subband electrical signal processor as in claim 1, 2 or 3, said transceiver further comprising:

time delay means (D2,D3,D4) operating in at least one of said subbands to time delay said digital signals in an encoded bit-compressed digital format so as to provide time delay while reducing digital memory requirements for effecting such time delay; and

control means (14) for formatting the digital data being transmitted over said digital communication channel to include cryptographic synchronisation and frame synchronisation signals recurrently during an ongoing transmission, said synchronisation signals facilitating late entry receipt of the transmitted digital data.

6. A transceiver as in claim 5 wherein:

said filter means (102) comprises QMF filter means for separating a digitised input signal into plural subbands of digital signals having different respective time delays therein and representing corresponding subbands of signal frequency components;

said encoder means (104,106,108,110) separately codes the digital signals in each subband in a digitally compressed form to provide compressed coded digital signals in each of said subbands;

said time delay means (D2,D3,D4) time delaying said compressed coded digital signals in at least one of said subbands for a predetermined time period to provide substantially time synchronous digital signals at a predetermined point in each of said subbands; and

said multiplex means (112) combines said substantially time synchronous digital signals into an output stream of coded compressed digital signals.

7. A transceiver as in claim 5 further including:

transmitter and receiver means for transmitting and/or receiving a succession of digital signals; and wherein

said control means (14) is connected to said transmitter and receiver means and includes a digital data microprocessor system programmed so as to perform the following functions:

(a) initial synchronisation acquisition wherein said received digital signals are scanned for an initial preamble portion from which frame synchronisation, addressing and cryptographic synchronisation signals are extracted,

(b) ongoing synchronisation maintenance wherein said received digital signals are scanned for data frames succeeding said preamble portion and from which data frames at least said frame synchronisation and said cryptographic synchronisation signals are repeatedly extracted so as to permit maintenance of such synchronisation throughout the decoding of an encrypted message comprising plural such data frames, and

(c) late entry wherein, in the event frame synchronisation and/or cryptographic synchronisation are lost or not acquired from said preamble, said data frames are scanned and from which synchronisation, addressing and cryptographic synchronisation signals are nevertheless extracted and control passed back to said ongoing synchronisation maintenance function such that the remaining portion of a properly addressed encrypted message data stream is nevertheless successfully decoded.

8. A transceiver as in claim 7 wherein said control means is programmed to process said digital signals occurring in substantially the following time sequence:

(A) a preamble portion having:

(1) an alternating 1,0 data pattern,

(2) 12 repeated sets of

(i) a 16 bit synchronisation word including a multiple bit Barker code,

(ii) a 16 bit outside address word including a multiple bit address repeated at least once,

(iii) a 16 bit sync number code including a multiple bit number code (identifying which of the 12 repeats is involved) repeated at least once in complemented form and also including at least 1 bit of parity code,

(3) 9 repeated sets of

(i) a 64 bit guard band,

(ii) a 64 bit cryptographic initialisation vector,

(iii) a 16 bit selective signalling code identifying the intended message recipient(s),

(B) successive data frames which each include

(1) a 112 bit header portion having

(i) a 16 bit synchronisation word including a multiple bit Barker code,

(ii) a 16 bit outside address word including a multiple bit address repeated at least once,

(iii) a 16 bit selective signalling code identifying the intended message recipient(s),

(iv) a 64 bit cryptographic initialisation vector,

(v) at least one of the bit fields in the header portion being distinguishable from the respectively corresponding field in the preamble so as to permit detection of a late entry condition,

(2) a 2040 bit string of cyptographically encoded digital data, and

(C) an end-of-message word signifying the end of a given message.

9. A transceiver as in claim 5 including:

receiver means (12) for providing a sequence of received digital signals;

transmitter means (10) for transmitting a sequence of generated digital signals; and

wherein both said received and said generated digital signals are formatted to include

(a) an initial preamble portion which includes timing synchronisation signals and cryptographic synchronisation signals, and

(b) a subsequent sequence of frames of encrypted data also including embedded timing synchronisation signals and embedded cryptographic synchronisation signals;

said control means (14) automatically detecting and monitoring said embedded synchronisation signals within said received digital signals, maintaining accurate timing and cryptographic synchronisation data, and establishing accurate timing and cryptographic synchronisation even after occurrence of said preamble portion in the event of belated signal reception or temporary loss of accurate synchronisation data during the course of a given received message.

10. A transceiver as in claim 9 wherein said control means processes digital signals which include addressing signals identifying the desired message recipient both in said initial preamble portion and embedded in said frames of encrypted data, said control means also being adapted to automatically detect and monitor said embedded address signals so as to enable belated correctly addressed receipt of a message even after occurrence of said preamble portion in the event of belated signal reception or temporary loss of accurate address data during the course of a given received message.

11. A hybrid subband electrical signal processing method comprising:

accepting digital electrical signals representing a band of frequency components and producing four octave subband outputs covering an overall frequency band of approximately 180 to 2900 Hz;

receiving the three lowest frequency octave digital subband signals from said outputs and encoding

20

such received subband signals in accordance with an APCM or ADPCM encoding algorithm to produce first encoded digital signals;

receiving the highest octave digital subband signals from another one of said outputs and encoding such received subband signals in accordance with a BCPCM encoding algorithm to produce second encoded digital signals; and

combining said first and second encoded digital signals into a common string of digital signals for transmission over a digital signal communication channel.

12. A hybrid subband electrical signal processing method as in claim 11 wherein the highest frequency subband is BCPCM encoded using a 1-bit BCPCM quantizer.

13. A hybrid subband electrical signal processing method as in claim 11 or 12 further comprising:

separating an incoming string of digital signals into plural subband channels having therein encoded incoming digital signals representing signal components within different frequency subbands;

receiving said encoded incoming digital signals in at least one of said subband channels and producing decoded incoming digital signals therefrom in accordance with an APCM or ADPCM decoding algorithm;

receiving said encoded incoming digital signals in at least one other of said subband channels and producing decoded incoming digital signals therefrom in accordance with a BCPCM decoding algorithm; and

accepting said decoded incoming digital signals from each subband channel and producing a decoded string of digital signals.

14. A hybrid subband electrical signal processing method as in claim 13 wherein said accepting step combines four octave subbands covering an overall frequency band of approximately 180 to 2900 Hz and wherein the highest frequency subband is BCPCM decoded while the three lowest frequency subbands are APCM or ADPCM decoded.

15. A method of sending and receiving digitised and cryptographically encrypted data signals over a common communication channel, said method including hybrid subband electrical signals processing steps as in claim 11, 12 or 13, said method further comprising:

processing received hybrid subband encoded digital signals into audio output and generating digital signals from locally input audio signals wherein both said received and said generated digital signals are formatted to include:

an initial preamble portion which includes timing synchronisation signals and cryptographic synchronisation signals, and

a subsequent sequence of frames of encrypted data also including embedded timing synchronisation signals and embedded cryptographic synchronisation signals; and

automatically detecting and monitoring said embedded synchronisation signals within said received digital signals so as to maintain accurate timing and cryptographic synchronisation data and establishing accurate timing and cryptographic synchronisation even after occurrence of said preamble portion in the event of belated signal reception or temporary loss of accurate synchronisation data during the course of a given received message.

16. A method as in claim 15 wherein said digital signals include addressing signals identifying the desired message recipient both in said initial preamble portion and embedded in said frames of encrypted data, and automatically detecting and monitoring said embedded address signals so as to enable belated correctly addressed receipt of a message even after occurrence of said preamble portion of the event of belated signal reception or temporary loss of accurate address data during the course of a given received message.

17. A method as in claim 15 further comprising the step of time delaying said digital subband signals in at least one of said subbands so as to reduce the digital memory requirements for effecting such time delay.

18. A method as in claim 17, wherein said time delaying step includes the step of time delay compensating said digital subband signals so as to establish time synchronisation of said digital signals in said plural subbands.

**Patentansprüche**

1. Elektrischer Hybrid-Teilband-Signalprozessor, der aufweist:
   eine Filtereinrichtung (102), die einen Eingang zum Annehmen elektrischer Digitalsignale hat, welche ein Band mit Frequenzkomponenten repräsentieren, und vier Oktav-Teilband-Ausgänge zur Verfügung stellt, die ein Gesamtfrequenzband von ungefähr 180 bis 2900 Hz abdecken;
   eine erste, digitale Kodierer-Einrichtung (104, 106, 108) zum Empfangen der drei niedrigsten Frequenz-Oktav-Digital-Teilband-Signale von den Ausgängen und zum Kodieren jedes so empfangenen Teilbands in Übereinstimmung mit einem APCM- oder ADPCM-Kodieralgorithmus, um erste, kodierte Digitalsignale zu erzeugen;
   eine zweite, digitale Kodierer-Einrichtung (110) zum Empfangen der höchsten Oktav-Digital-Teilband-Signale von einem anderen der Ausgänge und zum Kodieren der so empfangenen Teilbandsignale in Übereinstimmung mit einem BCPCM-Kodieralgorithmus, um zweite, kodierte Digitalsignale zu erzeugen; und
   eine Multiplexer-Einrichtung (112) zum Kombinieren der ersten und zweiten, kodierten Digitalsignale in eine gemeinsame Folge von Digitalsignalen zur Übertragung über einen Digitalsignal-Kommunikationskanal.

2. Elektrischer Hybrid-Teilband-Signalprozessor wie in Anspruch 1, wobei der höchste Oktav-Teilband-Ausgang BCPCM-kodiert wird, indem ein 1-Bit-BCPCM-Quantisierer verwendet wird.

3. Elektrischer Hybrid-Teilband-Signalprozessor wie in Anspruch 1 oder 2, der weiterhin aufweist: eine Demultiplexer-Einrichtung (114) zum Trennen einer ankommenden bit-seriellen Folge von Digitalsignalen in mehrere Teilband-Kanäle, in denen ankommende Digitalsignale kodiert sind, die Signalkomponenten innerhalb unterschiedlicher Frequenz-Teilbänder repräsentieren;
   eine erste, digitale Dekodierer-Einrichtung zum Empfangen der kodierten, ankommenden Digitalsignale in zumindest einem der Teilband-Kanäle und zum Erzeugen dekodierter, ankommender Digitalsignale von diesem in Übereinstimmung mit einem APCM- oder einem ADPCM-Dekodieralgorithmus;
   eine zweite, digitale Dekodierer-Einrichtung zum Empfangen der kodierten, ankommenden Digitalsignale in zumindest einem weiteren der Teilband-Kanäle und zum Erzeugen dekodierter, ankommender Digitalsignale von diesem in Übereinstimmung mit einem BCPCM-Dekodieralgorithmus;
   eine Inversfilter-Einrichtung (116) zum Annehmen der dekodierten, ankommenden Digitalsignale von jedem Teilband-Kanal und zum Erzeugen einer dekodierten Folge von Digitalsignalen.

4. Elektrischer Hybrid-Teilband-Signalprozessor wie in Anspruch 3, wobei die Inversfilter-Einrichtung (116) vier Oktav-Teilbänder, die ein Gesamtfrequenzband von ungefähr 180 bis 2900 Hz abdecken, kombiniert und wobei das höchste Frequenz-Teilband BCPCM-dekodiert wird, während die drei niedrigsten Frequenz-Teilbänder APCM- oder ADPCM-dekodiert werden.

5. Kryptographische Digitalsignal-Sende/Empfangs-Einrichtung, die einen elektrischen Hybrid-Teilband-Signalprozessor wie in Anspruch 1, 2 oder 3 enthält, wobei die Sende/Empfangs-Einrichtung weiterhin aufweist:
   eine Zeitverzögerungseinrichtung (D2, D3, D4), die in zumindest einem der Teilbänder arbeitet, um die Digitalsignale in einem kodierten, bit-komprimierten Digitalformat derart zeitlich zu verzögern, daß eine Zeitverzögerung erzeugt wird, während die Digital-Speicher-Anforderungen zum Bewirken einer solchen Zeitverzögerung reduziert sind; und
   eine Steuereinrichtung (14) zum Formatieren der digitalen Daten, die über den digitalen Kommunikationskanal übertragen werden, um Signale für eine kryptographische Synchronisation und eine Rahmensynchronisation wiederholend während einer laufenden Übertragung zu enthalten, wobei die Synchronisationssignale einen späten Eingangs-Empfang der übertragenen, digitalen Daten erleichtern.

6. Sende/Empfangs-Einrichtung wie in Anspruch 5, wobei:
   die Filtereinrichtung (102) eine QMF-Filtereinrichtung zum Separieren eines digitalisierten Eingangssignals in mehrere Teilbänder von Digitalsignalen aufweist, die jeweils unterschiedliche Zeitverzögerungen haben und entsprechende Teilbänder von Signal-Frequenzkomponenten wiedergeben;
   die Kodierer-Einrichtung (104, 106, 108, 110) die Digitalsignale in jedem Teilband in eine digital komprimierte Form getrennt kodiert, um komprimierte, kodierte Digitalsignale in jedem der Teilbänder zu erzeugen;

die Zeitverzögerungs-Einrichtung (D2, D3, D4) die komprimierten, kodierten Digitalsignale in zumindest einem der Teilbänder für eine vorgegebene Zeitdauer zeitlich verzögert, um im wesentlichen zeitsynchrone Digitalsignale an einem vorgegebenen Punkt in jedem der Teilbänder zu erzeugen; und

die Multiplexer-Einrichtung (112) die im wesentlichen zeitsynchronen Digitalsignale in einen Ausgangsstrom kodierter, komprimierter Digitalsignale kombiniert.

7. Sende/Empfangs-Einrichtung wie in Anspruch 5, die weiterhin enthält:

eine Sender- und Empfängereinrichtung zum Senden und/oder Empfangen einer Folge von Digitalsignalen;

und wobei

die Steuereinrichtung (14) mit der Sender- und Empfängereinrichtung verbunden ist und ein Digitaldaten-Mikroprozessorsystem enthält, das derart programmiert ist, um die nachfolgenden Funktionen durchzuführen:

(a) eine Anfangs-Synchronisations-Erfassung, wobei die empfangenen Digitalsignale nach einem anfänglichen Einleitungsabschnitt abgetastet werden, aus dem Rahmensynchronisations-, Adressierungs-Synchronisationssignale und kryptographische Synchronisationssignale herausgezogen werden,

(b) eine laufende Synchronisationsaufrechterhaltung, wobei die empfangenen Digitalsignale nach Datenrahmen abgetastet werden, die dem Einleitungsabschnitt nachfolgen und aus denen zumindest die Rahmensynchronisationssignale und die Signale für kryptographische Synchronisation wiederholt herausgezogen werden, um eine Aufrechterhaltung dieser Synchronisation während des gesamten Dekodierens einer verschlüsselten Nachricht aufrechtzuerhalten, die viele solche Datenrahmen aufweist, und

(c) einen späten Eingang, wobei im Fall, daß eine Rahmensynchronisation und/oder eine kryptographische Synchronisation verloren gehen oder von der Einleitung nicht bereitgestellt werden, diese Datenrahmen abgetastet werden und aus ihnen Synchronisations-, Adressierungs-Synchronisationssignale und kryptographische Synchronisationssignale dennoch herausgezogen werden, und die Steuerung zu der laufenden Synchronisationsaufrechterhaltungsfunktion derart zurückgegeben wird, daß der verbleibende Abschnitt eines in geeigneter Weise adressierten, verschlüsselten Nachrichtendatenstroms dennoch erfolgreich dekodiert wird.

8. Sende/Empfangs-Einrichtung wie in Anspruch 7, wobei die Steuereinrichtung programmiert ist, die Digitalsignale zu verarbeiten, die im wesentlichen in der nachfolgenden Zeitfolge auftreten:

(A) ein Einleitungsabschnitt hat:

(1) ein abwechselndes 1,0 Datenmuster,

(2) 12 wiederholte Sätze von

(i) einem 16-Bit-Synchronisationswort, das einen Mehrfach-Bit-Barker-Code enthält,

(ii) einem 16-Bit-Außen-Adreßwort, das eine Mehrfach-Bit-Adresse enthält, die zumindest einmal wiederholt ist,

(iii) einem 16-Bit-Synchronisationsnummerncode, der einen Mehrfach-Bit-Nummerncode (der identifiziert, welche der zwölf Wiederholungen beteiligt ist) enthält, der zumindest einmal in komplementärer Form wiederholt ist und zumindest auch 1 Bit eines Paritäts-Codes enthält,

(3) 9 wiederholte Sätze von

(i) einem 64-Bit-Sicherheitsband,

(ii) einem kryptographischen Initialisierungsvektor mit 64 Bit,

(iii) einem selektiven Signalisierungscode mit 16 Bit, der den (die) beabsichtigten Nachrichtenempfänger identifiziert,

(B) hintereinanderfolgende Datenrahmen, die jeweils enthalten

(1) einen Kopfabschnitt mit 112 Bit, der aufweist

(i) ein 16-Bit-Synchronisationswort, das einen Mehrfach-Bit-Barker-Code enthält,

(ii) ein 16-Bit-Außen-Adreßwort, das eine Mehrfach-Bit-Adresse enthält, die zumindest einmal wiederholt ist,

(iii) einen selektiven Signalisierungscode mit 16 Bit, der den (die) beabsichtigten Nachrichtenempfänger identifiziert,

(iv) einen kryptographischen Initialisierungsvektor mit 64 Bit,

(v) zumindest eines der Bit-Felder in dem Kopfabschnitt ist gegenüber dem jeweiligen entsprechenden Feld in der Einleitung unterscheidbar, um die Detektion einer Spät-Eingangs-Bedingung zu erlauben,

(2) eine Folge von kryptographisch kodierten, digitalen Daten mit 2040 Bit, und

(C) ein Nachrichtenende-Wort, das das Ende einer gegebenen Nachricht kennzeichnet.

**9.** Sende/Empfangs-Einrichtung wie in Anspruch 5, die enthält:

eine Empfängereinrichtung (12) zum Erzeugen einer Folge von empfangenen Digitalsignalen; eine Sendereinrichtung (10) zum Senden einer Folge von erzeugten Digitalsignalen; und

wobei sowohl die empfangenen als auch die erzeugten Digitalsignale formatiert sind, um zu enthalten

(a) einen anfänglichen Einleitungsabschnitt, der Timing-Synchronisationssignale und kryptographische Synchronisationssignale enthält, und

(b) eine nachfolgende Folge von Rahmen aus verschlüsselten Daten, die auch eingebettete Timing-Synchronisationssignale und eingebettete kryptographische Synchronisationssignale enthalten;

wobei die Steuereinrichtung (14) automatisch die eingebetteten Synchronisationssignale innerhalb der empfangenen Digitalsignale detektiert und überwacht, das genaue Timing und kryptographische Synchronisationsdaten aufrechterhält und das genaue Timing und die kryptographische Synchronisation auch nach dem Auftreten des Einleitungsabschnitts im Fall eines verspäteten Signalempfangs oder eines vorübergehenden Verlustes genauer Synchronisationsdaten während des Verlaufs einer gegebenen, empfangenen Nachricht einrichtet.

**10.** Sende/Empfangs-Einrichtung wie in Anspruch 9, wobei die Steuereinrichtung Digitalsignale verarbeitet, die Adreßsignale, welche den erwünschten Nachrichtenempfänger identifizieren, sowohl im anfänglichen Einleitungsabschnitt als auch eingebettet in die Rahmen der verschlüsselten Daten enthalten, wobei die Steuereinrichtung auch dafür ausgelegt ist, automatisch die eingebetteten Adreßsignale zu detektieren und zu überwachen, um einen verspäteten, korrekt adressierten Empfang einer Nachricht auch nach dem Auftreten des Einleitungsabschnitts im Fall verspäteten Signalempfangs oder eines vorübergehenden Verlusts genauer Adreßdaten während des Verlaufs einer gegebenen, empfangenen Nachricht zu ermöglichen.

**11.** Elektrisches Hybrid-Teilband-Signal-Verarbeitungsverfahren, das aufweist:

Annehmen digitaler, elektrischer Signale, die ein Band von Frequenzkomponenten wiedergeben, und Erzeugen von vier Oktav-Teilband-Ausgängen, die ein Gesamtfrequenzband von ungefähr 180 bis 2900 Hz abdecken;

Empfangen der drei niedrigsten Frequenz-Oktav-Teilband-Digitalsignale von den Ausgängen und Kodieren der so empfangenen Teilband-Signale in Übereinstimmung mit einem APCM- oder ADPCM-Kodieralgorithmus, um erste, kodierte Digitalsignale zu erzeugen;

Empfangen der höchsten Oktav-Teilband-Digitalsignale von einem anderen der Ausgänge und Kodieren der so empfangenen Teilbandsignale in Übereinstimmung mit einem BCPCM-Kodieralgorithmus, um zweite, kodierte Digitalsignale zu erzeugen; und

Kombinieren der ersten und zweiten, kodierten Digitalsignale in eine gemeinsame Folge von Digitalsignalen zum Übertragen über einen Digitalsignal-Kommunikationskanal.

**12.** Elektrisches Hybrid-Teilband-Signal-Verarbeitungsverfahren wie in Anspruch 11, wobei das höchste Frequenz-Teilband BCPCM-kodiert wird, indem ein 1-Bit-BCPCM-Quantisierer verwendet wird.

**13.** Elektrisches Hybrid-Teilband-Signal-Verarbeitungsverfahren wie in Anspruch 11 oder 12, das weiterhin aufweist:

Trennen einer ankommenden Folge von Digitalsignalen in mehrere Teilband-Kanäle, in denen kodierte, ankommende Digitalsignale vorhanden sind, die Signalkomponenten innerhalb unterschiedlicher Frequenz-Teilbänder wiedergeben;

Empfangen der kodierten, ankommenden Digitalsignale in zumindest einem der Teilband-Kanäle und Erzeugen dekodierter, ankommender Digitalsignale von ihm in Übereinstimmung mit einem APCM- oder ADPCM-Dekodieralgorithmus;

Empfangen der kodierten, ankommenden Digitalsignale in zumindest einem anderen der Teilband-Kanäle und Erzeugen dekodierter, ankommender Digitalsignale von ihm in Übereinstimmung mit einem BCPCM-Dekodieralgorithmus; und

Annehmen der dekodierten, ankommenden Digitalsignale von jedem Teilband-Kanal und Erzeugen einer dekodierten Folge von Digitalsignalen.

**14.** Elektrisches Hybrid-Teilband-Signal-Verarbeitungsverfahren wie in Anspruch 13, wobei der Annahmeschritt vier Oktav-Teilbänder kombiniert, die ein Gesamtfrequenzband von ungefähr 180 bis 2900 Hz abdecken, und wobei das höchste Frequenz-Teilband BCPCM-dekodiert wird, während die drei niedrigsten Frequenz-Teilbänder APCM- oder ADPCM-dekodiert werden.

**15.** Verfahren zum Senden und Empfangen digitalisierter und kryptographisch verschlüsselter Datensignale über einen gemeinsamen Kommunikationskanal, wobei das Verfahren elektrische Hybrid-Teilband-Signal-Verarbeitungsschritte wie in Anspruch 11, Anspruch 12 oder Anspruch 13 enthält, wobei das Verfahren weiterhin aufweist:

Verarbeiten empfangener, hybrid-teilband-kodierter Digitalsignale in einem Audio-Ausgang und Erzeugen digitaler Signale von lokal eingegebenen Audiosignalen, wobei sowohl die empfangenen als auch die erzeugten Digitalsignale formatiert sind, damit sie enthalten:

einen anfänglichen Einleitungs-Abschnitt, der Timing-Synchronisationssignale und kryptographische Synchronisationssignale enthält, und

eine nachfolgende Sequenz von Rahmen von verschlüsselten Daten, die auch eingebettete Timing-Synchronisationssignale und eingebettete kryptographische Synchronisationssignale enthalten; und automatisches Detektieren und Überwachen der eingebetteten Synchronisationssignale innerhalb der empfangenen Digitalsignale, um ein genaues Timing und kryptographische Synchronisationsdaten aufrechtzuerhalten und ein genaues Timing und eine kryptographische Synchronisation auch nach dem Auftreten des Einleitungsabschnitts im Fall eines verspäteten Signalempfangs oder eines vorübergehenden Verlusts von genauen Synchronisationsdaten während des Verlaufs einer gegebenen, empfangenen Nachricht einzurichten.

**16.** Verfahren wie in Anspruch 15, wobei die Digitalsignale Adreßsignale, die den gewünschten Nachrichtenempfänger identifizieren, sowohl im anfänglichen Einleitungs-Abschnitt als auch eingebettet in den Rahmen der verschlüsselten Daten enthalten und

automatisches Detektieren und Überwachen der eingebetteten Adreßsignale, damit ein verspäteter, korrekt adressierter Empfang einer Nachricht auch nach dem Auftreten des Einleitungs-Abschnitts im Fall eines verspäteten Signalempfangs oder eines vorübergehenden Verlusts genauer Adreßdaten während des Verlaufs einer gegebenen, empfangenen Nachricht ermöglicht wird.

**17.** Verfahren wie in Anspruch 15, das weiterhin den Schritt des Zeitverzögerns der digitalen Teilband-Signale in zumindest einem der Teilbänder enthält, um die Digitalspeicher-Anforderungen zum Bewirken einer solchen Zeitverzögerung zu reduzieren.

**18.** Verfahren wie in Anspruch 17, wobei der zeitverzögernde Schritt den Schritt der Zeitverzögerungs-Kompensierung der Teilband-Digitalsignale enthält, um eine Zeitsynchronisation der Digitalsignale in den vielen Teilbändern einzurichten.

**Revendications**

**1.** Processeur hybride de signal électrique par bandes subdivisées comprenant :

des moyens de filtre (102) ayant une entrée pour accepter des signaux électriques numériques représentant une bande de composantes de fréquence et fournissant des sorties à quatre bandes subdivisées d'octave couvrant une bande globale de fréquences d'environ 180 à 2900 Hz ;

des premiers moyens de codage numérique (104, 106, 108) pour recevoir desdites sorties les trois signaux des bandes subdivisées d'octave de fréquences les plus basses et pour coder chacune des bandes subdivisées ainsi reçues selon un algorithme de codage APCM ou ADPCM afin de produire des premiers signaux numériques codés ;

des deuxièmes moyens de codage numérique (110) pour recevoir d'une autre desdites sorties les signaux de la bande subdivisée d'octave de fréquences les plus élevées et pour coder de tels signaux de bande subdivisée ainsi reçus selon un algorithme de codage BCPCM afin de produire des deuxièmes signaux numériques codés ;

des moyens de multiplexage (112) pour combiner lesdits premiers et deuxièmes signaux numériques codés en une chaîne commune de signaux numériques pour une émission sur un canal de communication de signaux numériques.

**2.** Processeur hybride de signal électrique par bandes subdivisées selon la revendication 1, dans lequel la sortie de bande d'octave subdivisée la plus élevée est codée en BCPCM en utilisant un quantificateur BCPCM à 1 bit.

**3.** Processeur hybride de signal électrique par bandes subdivisées selon la revendication 1 ou 2, comprenant en outre :

des moyens de démultiplexage (114) pour séparer une chaîne entrante de bits en série en plusieurs canaux de bande subdivisée ayant, codés en eux, des signaux numériques entrants représentant des composantes de signal dans différentes bandes subdivisées de fréquence ;

des premiers moyens de décodage numérique pour recevoir lesdits signaux numériques codés entrants dans au moins un desdits canaux de bande subdivisée et produire à partir d'eux des signaux numériques décodés entrants selon un algorithme de décodage APCM or ADPCM ;

des deuxièmes moyens de décodage numérique pour recevoir lesdits signaux numériques codés entrants dans au moins un autre desdits canaux de bande subdivisée et produire à partir d'eux des signaux numériques décodés entrants selon un algorithme de décodage BCPCM ;

des moyens de filtre inverse (116) pour accepter lesdits signaux numériques décodés entrants de chaque canal de bande subdivisée et pour produire une chaîne décodée de signaux numériques.

**4.** Processeur hybride de signal électrique par bandes subdivisées selon la revendication 3, dans lequel lesdits moyens de filtre inverse (116) combinent quatre bandes subdivisées d'octave couvrant une bande globale de fréquences d'environ 180 à 2900 Hz et dans lequel la bande subdivisée de fréquences les plus élevées est décodée selon BCPCM tandis que les trois bandes subdivisées de fréquences les plus basses sont décodées selon APCM ou ADPCM.

**5.** Emetteur-récepteur de signaux numériques cryptographiques comprenant un processeur hybride de signal électrique par bandes subdivisées selon la revendication 1, 2 ou 3, ledit émetteur-récepteur comprenant en outre :

des moyens de retard de temps (D2, D3, D4) fonctionnant dans au moins une des bandes subdivisées pour retarder dans le temps lesdits signaux numériques dans un format numérique codé à compression de bits, de manière à fournir un retard de temps tout en réduisant les besoins en mémoire numérique pour effectuer un tel retard de temps ; et

des moyens de commande (14) pour formater les données numériques qui sont transmises sur ledit canal de communication numérique pour inclure de manière récurrente des signaux de synchronisation cryptographique et de synchronisation de trame pendant une émission en cours, lesdits signaux de synchronisation facilitant une réception en entrée tardive des données numériques émises.

**6.** Emetteur-récepteur selon la revendication 5, dans lequel :

lesdits moyens de filtre (102) comprennent des moyens de filtre QMF (filtre miroir en quadrature) pour séparer un signal d'entrée numérisé en plusieurs bandes subdivisées ayant des retards de temps correspondants différents et représentant des bandes subdivisées correspondantes de composantes de fréquence de signal ;

lesdits moyens de codage (104, 106, 108, 110) codent séparément les signaux numériques dans chaque bande subdivisée sous une forme comprimée numériquement pour produire des signaux numériques codés comprimés dans chacune desdites bandes subdivisées ;

lesdits moyens de retard de temps (D2, D3, D4) retardent dans le temps lesdits signaux numériques codés comprimés dans au moins un desdites bandes subdivisées pendant une période de temps prédéterminée afin de fournir des signaux numériques sensiblement synchrones dans le temps à un point prédéterminé dans chacune desdites bandes subdivisées ; et

lesdits moyens de multiplexage (112) combinent lesdits signaux numériques sensiblement synchrones dans le temps en un débit de sortie de signaux numériques codés comprimés.

**7.** Emetteur-récepteur selon la revendication 5, comprenant en outre :

des moyens d'émission et de réception pour émettre et/ou pour recevoir une succession de signaux numériques ; et dans lequel

lesdits moyens de commande (14) sont reliés auxdits moyens d'émission et de réception et comprennent un système à microprocesseur numérique de données programmé de manière à exécuter les fonctions suivantes :

EP 0 178 608 B1

(a) acquisition initiale de synchronisation dans laquelle lesdits signaux numériques reçus sont balayés pendant une portion de préambule de laquelle sont extraits des signaux de synchronisation de trame, d'adressage et de synchronisation cryptographique,

(b) conservation de synchronisation en cours, dans laquelle lesdits signaux numériques reçus sont balayés pendant des trames de données succédant à ladite portion de préambule, et de ces dites trames de données sont extraits de manière répétée au moins lesdits signaux de synchronisation de trame et de synchronisation cryptographique, afin de permettre une conservation d'une telle synchronisation pendant le décodage d'un message chiffré comprenant plusieurs de telles trames de données, et

(c) entrée tardive, dans laquelle, dans le cas où une synchronisation de trame et/ou une synchronisation cryptographique sont perdues ou non acquises à partir dudit préambule, lesdites trames de données sont balayées et à partir desquelles des signaux de synchronisation, d'adressage et de synchronisation cryptographique sont néanmoins extraits et la commande est rendue à ladite fonction en cours de conservation de synchronisation, de sorte que la portion restante d'un débit de données de message chiffré adressé correctement est néanmoins décodée avec succès.

**8.** Emetteur-récepteur selon la revendication 7, dans lequel lesdits moyens de commande sont programmés pour traiter lesdits signaux numériques qui se présentent dans essentiellement la séquence de temps suivante :

(A) une portion de préambule ayant

(1) un motif alterné de données 1, 0,

(2) 12 ensembles répétés de

(i) un mot de synchronisation de 16 bits comprenant un mot de code de Barker à plusieurs bits,

(ii) un mot d'adresse extérieure de 16 bits comprenant une adresse de plusieurs bits répétée au moins une fois,

(iii) un code de nombre de synchronisation de 16 bits, comprenant un code de plusieurs bits (identifiant laquelle des 12 répétitions est concernée), répété au moins une fois sous une forme complémentée et comprenant aussi au moins 1 bit de code de parité,

(3) 9 ensembles répétés de

(i) une bande de garde de 64 bits,

(ii) un vecteur d'initialisation cryptographique de 64 bits

(iii) un code de signalisation sélective de 16 bits identifiant le ou les destinataires de message souhaités,

(B) des trames successives de données qui comprennent chacune

(1) une portion d'en-tête de 112 bits ayant

(i) un mot de synchronisation de 16 bits comprenant un mot de code de Barker à plusieurs bits,

(ii) un mot d'adresse extérieure de 16 bits comprenant une adresse à plusieurs bits répétée au moins une fois,

(iii) un code de signalisation sélective de 16 bits identifiant le ou les destinataires de message souhaités,

(iv) un vecteur d'initialisation cryptographique de 64 bits,

(v) au moins un des champs de bits dans la portion d'en-tête pouvant être distingué du champ respectif correspondant dans le préambule, afin de permettre une détection d'une condition d'entrée tardive,

(2) une chaîne de 2040 bits de données numériques codées de manière cryptographique, et

(C) un mot de fin de message signifiant la fin d'un message donné.

**9.** Emetteur-récepteur selon la revendication 5, comprenant :

des moyens de réception (12) pour fournir une séquence de signaux numériques reçus ;

des moyens d'émission (10) pour émettre une séquence de signaux numériques produits ; et

dans lequel à la fois lesdits signaux reçus et lesdits signaux émis produits sont formatés pour inclure

(a) une portion initiale de préambule qui comprend des signaux de synchronisation dans le temps et des signaux de synchronisation cryptographique, et

(b) une séquence ultérieure de trames de données chiffrées comprenant aussi des signaux de synchronisation dans le temps incorporés et des signaux de synchronisation cryptographique

27

incorporés ;

lesdits moyens de commande (14) détectant automatiquement et surveillant lesdits signaux de synchronisation incorporés dans lesdits signaux numériques reçus, conservant des données de cadencement précis et de synchronisation cryptographique, et établissant un cadencement précis et une synchronisation cryptographique même après l'apparition de ladite portion de préambule dans le cas d'une réception retardée de signaux ou de perte temporaire de données de synchronisation précise pendant le déroulement d'un message reçu donné.

10. Emetteur-récepteur selon la revendication 9, dans lequel lesdits moyens de commande traitent des signaux numériques qui comprennent des signaux d'adressage identifiant le destinataire de message souhaité, à la fois dans ladite portion initiale de préambule et incorporés dans lesdites trames de données chiffrées, lesdits moyens de commande étant aussi conçus pour détecter automatiquement et surveiller lesdits signaux d'adresse incorporés afin de permettre une réception retardée et adressée correctement d'un message même après l'apparition de ladite portion de préambule dans le cas d'une réception retardée de signaux ou de perte temporaire de données d'adresse précise pendant le déroulement d'un message reçu donné.

11. Procédé hybride de traitement de signal électrique par bandes subdivisées comprenant :

l'acceptation de signaux électriques numériques représentant une bande de composantes de fréquence et produisant quatre bandes subdivisées d'octave couvrant une bande globale de fréquences d'environ 180 à 2900 Hz ;

la réception des trois signaux numériques de bande subdivisée d'octave de fréquences les plus basses desdites sorties et le codage de tels signaux de bande subdivisée reçus selon un algorithme de codage APCM ou ADPCM afin de produire des premiers signaux numériques codés ;

la réception des signaux numériques de la bande subdivisée d'octave de fréquence la plus élevée d'une autre desdites sorties et le codage de tels signaux de bande subdivisée reçus selon un algorithme de codage BCPCM afin de produire des deuxièmes signaux numériques codés ; et

la combinaison desdits premiers et deuxièmes signaux numériques codés dans une chaîne commune de signaux numériques pour une transmission sur un canal de communication de signaux numériques.

12. Procédé hybride de traitement de signal électrique par bandes subdivisées selon la revendication 11, dans lequel la bande subdivisée de fréquence la plus élevée est codée selon BCPCM en utilisant un quantificateur BCPCM à 1 bit.

13. Procédé hybride de traitement de signal électrique par bandes subdivisées selon la revendication 11 ou 12, comprenant en outre : la séparation d'une chaîne entrante de signaux numériques en plusieurs canaux de bande subdivisée ayant en eux des signaux numériques entrants codés et représentant des composantes de signal dans différentes bandes subdivisées de fréquence ;

la réception desdits signaux numériques codés entrants dans au moins un desdits canaux de bande subdivisée et la production à partir d'eux de signaux numériques entrants décodés selon un algorithme de décodage APCM ou ADPCM ;

la réception desdits signaux numériques codés entrants dans au moins un autre desdits canaux de bande subdivisée et la production à partir d'eux de signaux numériques entrants décodés selon un algorithme de décodage BCPCM ; et

l'acceptation desdits signaux numériques décodés entrants de chaque canal de bande subdivisée et la production d'une chaîne décodée de signaux numériques.

14. Procédé hybride de traitement de signal électrique par bandes subdivisées selon la revendication 13, dans lequel ladite étape d'acceptation combine quatre bandes subdivisées d'octave couvrant une bande globale de fréquences d'environ 180 à 2900 Hz et dans lequel la bande subdivisée de fréquence la plus élevée est décodée selon BCPCM tandis que les trois bandes subdivisées de fréquences les plus basses sont décodées selon APCM ou ADPCM.

15. Procédé pour envoyer et recevoir des signaux de données numérisées et chiffrées de manière cryptographique sur un canal commun de communications, ledit procédé comprenant des étapes de traitement hybride de signaux électriques par bandes subdivisées selon les revendications 11, 12 ou 13, ledit procédé comprenant en outre :

le traitement de signaux numériques reçus codés de manière hybride par bandes subdivisées en une sortie audiofréquence et la production de signaux numériques à partir de signaux audiofréquence introduits localement dans lequel à la fois lesdits signaux numériques reçus et lesdits signaux numériques produits sont formatés pour comprendre :

une portion initiale de préambule qui comprend des signaux de synchronisation dans le temps et des signaux de synchronisation cryptographique, et

une séquence ultérieure de trames de données chiffrées comprenant aussi des signaux incorporés de synchronisation dans le temps et des signaux incorporés de synchronisation cryptographique ; et

la détection et la surveillance automatiques desdits signaux incorporés de synchronisation dans lesdits signaux numériques reçus afin de conserver des données de cadencement précis et de synchronisation cryptographique et d'établir un cadencement précis et une synchronisation cryptographique même après l'apparition de ladite portion de préambule dans le cas d'une réception retardée de signaux ou d'une perte temporaire de données de synchronisation précise pendant le déroulement d'un message reçu donné.

16. Procédé selon la revendication 15, dans lequel lesdits signaux numériques comprennent des signaux d'adressage identifiant le destinataire de message souhaité à la fois dans la portion initiale de préambule et incorporés dans lesdites trames de données chiffrées, et détectant et surveillant automatiquement lesdits signaux d'adresse incorporés afin de permettre la réception retardée d'un message adressé correctement même après l'apparition de ladite portion de préambule dans le cas de réception retardée de signaux ou de perte temporaire de données précises d'adresse pendant le déroulement d'un message reçu donné.

17. Procédé selon la revendication 15, comprenant en outre l'étape de retarder dans le temps lesdits signaux numériques de bande subdivisée dans au moins une desdites bandes subdivisées afin de réduire les besoins de mémoire numérique pour obtenir un tel retard de temps.

18. Procédé selon la revendication 17, dans lequel ladite étape de retarder dans le temps comprend l'étape de compenser en retard de temps lesdits signaux numériques de bande subdivisée, afin d'établir une synchronisation dans le temps desdits signaux numériques dans lesdites plusieurs bandes subdivisées.

FIG. 1

# FIG. 2

### FUNCTIONAL BLOCK DIAGRAM
### HYBRID SUBBAND CODER/DECODER

SYNC/HEADER

102

4-BAND QMF FILTER BANK

INPUT

100

BAND 4 1450-2900 HZ

16 SAMPLE BCPCM 21/16 BITS AVG.

110

BAND 3 725-1450 HZ

2 BIT ADPCM

108

BAND 2 362-725 HZ

2 BIT ADPCM

106

BAND 1 181-362 HZ

3 BIT ADPCM

104

MUX

112

SERIAL OUTPUT BITS

DIGITAL COMMUNICATION CHANNEL

DEMUX

114

BCPCM DECODER    BAND 4

ADPCM DECODER    BAND 3

ADPCM DECODER    BAND 2

ADPCM DECODER    BAND 1

4-BAND QMF INVERSE FILTER BANK    OUTPUT

116

SYNC/HEADER

46,400 BITS/SEC.    43,300 BITS/SEC.    9244 BITS/SEC    9600 BITS/SEC.

TRANSMITTER

RECEIVER

EP 0 178 608 B1

# FIG. 3

FUNCTIONAL BLOCK DIAGRAM
OF ADPCM CODER/DECODER

EP 0 178 608 B1

# FIG. 4

FUNCTIONAL BLOCK DIAGRAM
OF BCPCM CODER/DECODER

BAND 4 SAMPLES FROM QMF

16 SAMPLE FIFO BUFFER — 402

(CAN BE PART OF TIME DELAY COMPENSATION BUFFER ON BAND 4 (IF DESIRED))

1 BIT QUANTIZE — 400

404A ACCUMULATE $\sum_{i=1}^{16} |x_i| = S$

404B COMPUTE GAIN = S/16 EVERY 16 SAMPLES

406 QUANTIZE

408 MUX

MUX/CHANNEL/DEMUX

RX BAND 4

410 DEMUX

SAMPLES LOGIC — 412

GAIN — 414

416 DECODE GAIN

STEP SIZE

UPDATE EVERY 16 SAMPLES

418 1 BIT DECODE

+STEP
−STEP

OUTPUT TO RECVR. QMF

TRANSMITTER

RECEIVER

EP 0 178 608 B1

# FIG. 5
## TRANSMIT OPERATION

MIC. → | A/D | → | SBC BW COMPRESSION | → | BUFFER & PACK | → | DES ENCODE | → | BUFFER & PACK | → | PARALLEL TO SERIAL | → | FILTER | → MODULATOR

# FIG. 6
## RECEIVE OPERATION

DISC → | LIMITER | → | SERIAL TO PARALLEL | → | BUFFER AND UNPACK | → | DES ENCODE | → | BUFFER AND UNPACK | → | SBC DECODER | → | D/A | → AUDIO AMP

EP 0 178 608 B1

F I G. 7
SYSTEM FREQUENCY RESPONSE

FIG. 8
(PRIOR ART)

EP 0 178 608 B1

TIME DELAY COMPENSATION

DIGITAL BANDWIDTH COMPRESSION CODERS

112

MUX

OUTPUT CHANNEL

SYNC HEADER

9600 b/s

D4 — 110
D3 — 108
D2 — 106
104

9244 b/s

CODER 4
CODER 3
CODER 2
CODER 1

BAND 1

BAND 2

BAND 3

BAND 4

$h_e$  $h_o$  x

$h_e$  $h_o$

$h_e$  $h_o$

43,500 b/s

$h_e$  $h_o$

100 INPUT FROM CODEC

TRANSMITTER QMF TREE

*F I G. 9*

TIME DELAY
COMPENSATION

DIGITAL BANDWIDTH
EXPANSION
DECODERS

114

BAND 4

DEMUX

$D_4$        DECODER 4

$D_3$        DECODER 3         BAND 3

$D_2$        DECODER 2       BAND 2

DECODER 1

BAND 1

INPUT
FROM
CHANNEL

SYNC, HEADER

9600 b/s

9244 b/s

$h_o$

$h_o$

$h_o$

$h_o$

$h_e$

$h_e$

$h_e$

$h_e$

X

2

2

2

2

OUTPUT
TO CODEC
-22-

46,200 b/s

43,500 b/s

RECEIVER INVERSE QMF TREE -116-

F I G. 10

EP 0 178 608 B1

FIG. 11

DOTTING = 240 BITS (25 ms AT 9600 bps) REPEATED 1,0 BIT PATTERN (eg. 10101010) FOR BIT SYNC.

S = 16 BIT SYNC WORD (5 BITS OF DOTTING FOLLOWED BY AN 11 BIT BARKER CODE)

OA = 16 BIT OUTSIDE ADDRESS (8 BIT REPEATER ADDRESS IS REPEATED ONCE (a) IN COMPLEMENTED FORM IF IN THE PREAMBLE OR (b) IN REGULAR NON-COMPLEMENTED FORM IF IN A DATA FRAME)

SN = 16 BIT SYNC NUMBER (5 BIT NUMBER REPEATED 3 TIMES WITH SECOND REPEAT IN COMPLEMENTED FORM PLUS 1 BIT ODD PARITY CODE)

GB = 64 BIT GUARD BAND (MAY BE FILLED WITH OPTIONAL MESSAGE OR DOTTING)

IV = 64 BIT INITIALIZATION VECTOR TO ESTABLISH CRYPTOGRAPHIC SYNC.

SS = 16 BIT SELECTIVE SIGNALLING ADDRESS FOR GROUP OR INDIVIDUAL SIGNALLING CAPABILITY

VOICE DATA = 2040 BIT ENCRYPTED VOICE DATA.

EOM = END OF MESSAGE WORD INCLUDING 16 BIT SYNC & 16 BIT DOTTING PATTERN REPEATED FOR ABOUT 50 ms.

EP 0 178 608 B1

F I G. 12

SYNC ACQUISITION SUBROUTINE

ENTRY — 1300

READ IV & SS BYTES FROM DATA FRAME HEADER & COMPARE JUST RECEIVED IV WITH PREDICTED NEXT IV (ALSO CHECK EOM & IF DETECTED, RESYNC MODEM & EXIT TO HIGHER LEVEL PROGRAM) — 1302

USE CURRENT RECEIVED IV TO DERIVE PREDICTED NEXT IV — 1308

IV LOSS ? — 1304
NO
YES

LATE ENTRY ? — 1306
YES
NO

LATE ENTRY FLAG SET ? — 1318
NO
YES

INCREMENT LOSS OF IV COUNTER — 1310

INDICATE GOOD LATE ENTRY BY RESETTING ENTRY FLAG — 1322

**F I G. 13**

**SYNC MAINTENANCE SUBROUTINE**

LOSS OF IV COUNTER ≤ MAX ? — 1312
YES
NO

CLEAR LOSS OF IV COUNTER — 1320

RESYNC RECEIVING MODEM — 1316

DECODE ENCRYPTED VOICE DATA FROM DATA FRAME — 1314

41

LATE ENTRY

DECODE AND
STORE IV-
& SS FROM
DATA FRAME
HEADER
*1400*

SS
CORRECT
FOR THIS
SITE
?
*1402*

NO → RESYNC
RECEIVING
MODEM
*1404*

YES

SET
LATE
ENTRY
FLAG
*1406*

## FIG. 14
### LATE ENTRY SUBROUTINE

PREDICT NEXT
IV INTERITIVELY
AND WAIT UNTIL
NEXT DATA
FRAME
*1408*

RETURN TO ENTRY
OF SYNC. MAINTENANCE
SUBROUTINE